# EUROPEAN PATENT APPLICATION

(11) **EP 4 020 432 A1**
(43) Date of publication of application: **29.06.2022**
(21) Application number: 20216670.8
(22) Date of filing: 22.12.2020
(51) Int. Cl.: G09B 7/00

(54) **PERSONAL SURVEILLANCE DEVICE, SYSTEM AND METHOD**

(71) Applicant: Nagravision SA, 1033 Cheseaux-sur-Lausanne (CH)
(72) Inventor: The designation of the inventor has not yet been filed
(74) Representative: Mewburn Ellis LLP

(57) **Abstract**

The present disclosure relates to surveillance technology. In particular, the present disclosure relates to a surveillance device, a surveillance system and a method of surveillance for surveillance of a person. Further in particular, the present disclosure relates to the surveillance of a person in a physical space to determine a compliant or non-compliant behaviour of said person. Accordingly, there is provided a personal surveillance device (110), comprising a first surveillance sensor element (116a), a second surveillance sensor element (116b) and a processing element (314), wherein the first surveillance sensor element and the second surveillance sensor element are sensor elements each comprising a different sensor type, wherein the personal surveillance device is adapted to be connectable to a host computing device and wherein the personal surveillance device is adapted to execute a computing environment on the host computing device.

## Description

### TECHNICAL FIELD

The present disclosure relates to surveillance technology.

In particular, the present disclosure relates to a surveillance device, a surveillance system and a method of surveillance for surveillance of a person.

Further in particular, the present disclosure relates to the surveillance of a person in a physical space to determine a compliant or non-compliant behaviour of said person.

### BACKGROUND

The current worldwide pandemic situation significantly impacts life as we know it. Economies stumble, borders are closed and also social life is reduced to a minimum. A significant part of the world population is confined to their homes as governments increasingly restrict freedom of movement and social contacts to contain the virus.

Also the education system is affected. Schools and Universities are closed and shift their education programs to online courses or simply leave the students with instructions and materials for self-study. While teaching is easily moved to a virtual, online program, not all parts of education can be moved into the cloud so easily. In particular, one part of any education or training has historically always required personal attendance, verification and surveillance, namely examinations. In consequence any educational institution now faces a significant challenge: how to carry out possibly thousands of exams concurrently in a remote examination set up while guaranteeing that an examinee is not cheating, does not receive unfair help from other people or by using materials that are not allowed in the context of an examination and finally that an examinee is indeed the person they claim to be.

Such exams used to be face-to-face or in person exams where examiners first establish the identity of the examinee present in a defined exam location and then monitor or survey the examinees for the duration of the exam so as to make sure that no unauthorised resources are used to gain an unfair advantage during the exam. In such a scenario, it was ensured that the examinee could only use their personal knowledge of a topic to answer the exam questions. In current days, where physical distancing is mandatory, it may not be possible anymore to conduct examinations as in person examinations on the premises of e.g. a university simply because current government rules significantly limit the number of people that are allowed to be in the vicinity of one another. Such rules could require the spread of the examinees over a significant space which in turn would increase the cost of such examination surveillance, be it people or space or both, to the extent that it becomes uneconomical. E.g., in situations where 10,000 or more examinations per day are conducted simultaneously, alone the distribution of questionnaires or exam papers and ensuring or surveying that no examinee starts early or finishes late potentially requires a number of examiners that is no longer practical.

Further, even the travel to and from an exam location may pose a significant health risk to both examinees and examiners, e.g. when public transportation is used and heavily frequented. In case of multiple examinations on consecutive days or within a defined time span, every trip poses a health risk and potentially contributes to the furthering of the pandemic. Such exposure to a potential health risk may in turn increase anxiety in examinees and may thus not contribute to conducting examinations in the best possible environment for the examinee. Forced to travel in a risky environment significantly impacts mental health and further increases the stress level of any examination. This may potentially result in the examinees performing below their own standard during examination not because they are not well prepared but because of external influences that are largely unrelated to the actual examination.

One straightforward solution would be to permit taking part in the examination in an environment that is safe and familiar to the examinee, provides the necessary tools to participate in the examination and is generally accessible without added health risks. E.g., a personal space at the home of an examinee is an ideal place to allow participation in an examination in a safe and secure manner. However, for reasons of fairness and equality it must be ensured that an examinee does not use resources that are not allowed during the examination and indeed is the person associated with a particular examination and does not receive help from other persons. In the case of an open book exam, only the confirmed identity of the examinee may be relevant, together with ensuring that only an allotted time is used for answering exam questions. In the case of a closed book exam, it may additionally be required to ensure that no unauthorised resources are used. Such resources may be books, notes or simply access to a database or the Internet which would allow the searching of answers to exam questions.

One solution to provide a suitable surveillance for conducting a remote examination would be for an examiner to constantly visually survey the examinee. Such could be done for example by having a web cam activated continuously during the examination. Thereby, an examiner is able to visually inspect the examinee as well as the surroundings or the space the examinee is situated in when participating in the examination. Such a scenario however does not necessarily reduce the headcount of examiners required as such an online surveillance may require a substantially continuous surveillance of an examinee by the examiner. Likewise, a simple video feed showing the examinee may not necessarily prevent examination fraud as a video feed is only a restricted window into the examinee space. E.g., when viewing the examinee, it may not be possible to view what an examinee is viewing on a computer screen. Is it the exam or is it an Internet search page used to find answers to exam questions. Further, a further person out of the view of the surveying examiner may be present, providing answers to exam questions. Still further it may even be conceivable that the examinee, after having been positively identified by the examiner, switches with a different person by some sort of clandestine manoeuvre, who then in turn answers the questions of the exam. Finally, in the case of the absence of a permanent Internet connection or communication connection between the examiner and the examinee, a suitable continuous surveillance, or any form of online surveillance, may not be practicable. It however cannot be at the detriment of the examinee to lack the technical prerequisites to allow conducting suitable surveillance in a remote examination scenario. E.g., in case of an Internet outage, which may occur at any time, even in highly developed industrialised countries, it would be unfair to an examinee to simply fail him because of an unreliable Internet connection. On the same token, it would be unfair to all other examinees to not take any action or sanction a loss of surveillance, since, even if only theoretical, an examinee could use such a loss of surveillance for examination fraud. Finally, in current days, a continuous video recording of an examinee and possibly the transmission of said recording to the examination body may not be allowed in due consideration of privacy laws.

When doing an exam remotely, the burden of trust is shifted to the examinee since the relation between examinee and the university carrying out the exam is not forcibly trustworthy. What normally is organized and carried out by the university in a clean-room auditorium with active surveillance by examiners now must be carried out by the examinee themselves at a remote location not supervised by the University in an automated and enforced manner to remove the issue of trust between the examinee and the university - temptation of cheating remains true and is a human behaviour that must be contained. Remote examinations should thus be as unintrusive as possible but as much constraining as possible for the examinee while being as robust and secure as possible for the University.

Thus, there may be a need to allow the conducting including surveillance of an examination in an environment remote from personal surveillance by examiners in a reliable, robust and secure manner by suitable surveillance of an examinee to assure the identity of the examinee and to detect and/or prevent any attempt of examination fraud.

Further, there may be a need to provide a sufficient technical infrastructure for conducting a remote examination from the viewpoint of identification, surveillance as well as exam distribution and collection.

Still further, there may be a need for a technical infrastructure to ensure sufficient surveillance even in case of a technical malfunction.

### SUMMARY

At least one such need may be met by the subject-matter of the independent claims. Preferred embodiments are provided in the dependent claims and are explained in detail in the following description.

The present invention relates to a surveillance device, a surveillance system and a method of surveillance for surveillance of a person.

According to a first aspect of the disclosure, there is provided a personal surveillance device comprising a first surveillance sensor element, a second surveillance sensor element, and a processing element, wherein the first surveillance sensor element and the second surveillance sensor element are sensor elements each comprising a different sensor type, wherein the personal surveillance device is adapted to be connectable to a host computing device and wherein the personal surveillance device is adapted to execute a computing environment on the host computing device.

According to a second aspect of the disclosure, there is provided a personal surveillance system, comprising a first personal surveillance device, which is a personal surveillance device according to the present disclosure, the first personal surveillance device further comprising at least one communication element, and a second personal surveillance device adapted to be affixable to a person to be surveyed, the second personal surveillance device comprising at least one communication element and a fixation element for affixing the second personal surveillance device to a person to be surveyed, wherein the second personal surveillance device is adapted to detect a fixation status indicating whether the fixation element is affixed to the person to be surveyed, wherein the first personal surveillance device and the second personal surveillance device are communicatively connected, wherein the first personal surveillance device and/or the second personal surveillance device is/are adapted to detect whether the first personal surveillance device and the second personal surveillance device are within a defined distance from each other, and wherein the second personal surveillance device is adapted to communicate the fixation status to the first personal surveillance device.

According to a third aspect of the disclosure, there is provided a method of surveillance using a personal surveillance device according to the present disclosure comprising a first surveillance sensor element, a second surveillance sensor element, at least one communication element and a processing element, wherein the first surveillance sensor element and the second surveillance sensor element are sensor elements each comprising a different sensor type, the method comprising connecting the personal surveillance device to a host computing device and executing, by the personal surveillance device, a computing environment on the host computing device. The method of surveillance of a person in a physical space occupied by the person to be surveyed may in particular use a personal surveillance system for surveillance of a person in a physical space occupied by the person to be surveyed

According to a fourth aspect of the disclosure, there is provided a computer-readable storage medium comprising instructions which, when executed by a computer, cause the computer to carry out the steps of the method according to the present disclosure.

Generally, with reference to university examinations, exams occur in an auditorium with potentially a few hundred examinees taking the exam at the same time. At the same time, examiners from the university are present, fulfilling the supervision role during the examination. Normally, these are under contract by the university carrying out the exam. Therefore, the examiners' role is official and must be respected by the examinees or otherwise they will fail the exam. A normal sequence of an exam can be summarized as follows: Identity of students is checked at their arrival. The examiners give exam instructions and guidance hand out questionnaires. The examination officially starts, and the examiners participate in active surveillance during the exam to ensure nobody is cheating, so as to prevent examination fraud. After a given amount of time, the examination time is over and the exam is officially stopped by the examiners. Now, the examiners collect the questionnaires/answer sheets of the examinees with their answers and securely store these for upcoming correction and scoring. Dependent on the University, the ratio between examiners and examinees can vary greatly. To provide meaningful monitoring, a single examiner can survey only a certain number of people to ensure no cheating. This limitation is due to the requirement of visual observation and monitoring. For sufficient surveillance, commonly one examiner surveys up to 20 examinees.

To ease the surveillance, the examination location, e.g. a University auditorium, is prepared and rendered a clean-room prior to the exam taking place there: sparse furnishing, no Wi-Fi or radio possible, no visual contact to the exterior, pen and paper are provided, no books, no calculators, no computer and internet access and so forth. All this is supposed to simplify the monitoring task of the examinees during the exam but also reduce temptation of examinees to cheat. It's also a way to test the examinee's actual knowledge by forcing the examinee to only use their brain and what was learned before.

There is also a ceremonial aspect of exams: the examinees have to personally appear in the auditorium location and present themselves in person to the examiners and are also required to identify themselves with something only they possess, a passport, a personal ID card or a student ID card. This may be seen as the strongest and most secure way of authenticating a person's identity, undermined only by presenting a forged ID card. This identification (i.e. something only the examinee has) can be further enforced by needing to enter a PIN (something only the examinee knows) to validate that the ID indeed belongs to the examinee who is the person named on the ID. In general, the PIN may not be necessary since commonly a photo of owner of the ID card is printed on the ID which normally should coincide with the examinee in question. A visual check of this should suffice, and may even be more reliable than only requiring a PIN.

Another aspect of conducting the examination on the premises of the University, is that the auditorium acts as a "clean room" in the sense that the auditorium has been prepared upfront and cleared so there is no opportunity or possibility to cheat by any matter: e.g. absence of a wireless network connection or the blocking of mobile communication, no radio, no allowed electronics or no bags and RF shielding are measures to ensure cheating is made complicated, and ideally impossible.

Thus, in consideration of the current worldwide situation, it may be beneficial to enable taking exams in a location remote from the premises of a university. A further example may be a student exchange program where a student may not be allowed to travel to the destination university due to travel restrictions but must pass exams to earn educational credits. This would result in the exams taking place in another location than the auditorium, which is a known and checked clean room, while not being able to directly monitor the examinee in person by examiners, and not being able to visually survey the examinee to avoid examination fraud. Free from the fact where the exam takes place, in an auditorium or at home remotely, the exam shall keep its key aspects that are a constraining, lone, ceremonial, obliged and enforced passage for the examinee. Remote examination should be as unintrusive as possible but as much constraining as possible for the examinee while at the same time as robust and secure as possible for the university.

It is clear, that when doing an exam remotely, the burden is shifted to the examinee's side and since the relationship between an examinee and the university carrying out the exam is not forcibly trustworthy, what normally is organized and carried out by the university (clean-room auditorium, examination fulfilment and active surveillance by examiner) now must be carried out by the examinee themselves in a location other than the University and in an automated and enforced way to remove the issue of lack of trust between the examinee and the university.

Switching from a university-premises centric examination to a remote examination normally requires that the examination is not conducted any more in paper form, but in digital form, as only the digital form allows for an easy enforcement and/or surveillance of a start time and an end time of a particular examination. E.g., access to a certain examination may only be allowed or possible within a defined timespan, while an end time is quasi-automatically enforced by counting only those exams that are submitted by a defined end time. Examinations that are accessed to early and are not submitted on time can be automatically failed.

To enforce a cleanroom policy at a remote location, the examinee may be required to provide a suitable photograph of the examination environment, e.g. a 360° photograph taken in close temporal relation to the start of an exam to check e.g. that the examinee is alone in the room and has no access to unauthorised resources, be that unauthorised material or other people assisting the examinee. It may subsequently be beneficial to track the location of the examinee to make sure that the examinee stays in the area where previously the photograph was taken. On the same token, a computer system used by the examinee to take the examination must observe the cleanroom policy. In other words, it must be ensured that while the examinee is using a computer system, no access to unauthorised material, e.g. locally stored documents or search engines on the Internet, is available. While an easy way would be that the University issues dedicated computer systems to each examinee to be used to take the examination, such would involve a significant financial burden on the University. In consequence, it would be beneficial to allow the examinee to use their own computer systems and to enforce the cleanroom policy differently.

Also, to not promote examination fraud, examination documents, e.g. questionnaires and answers documents must be appropriately secured. In other words, documents must not be accessible earlier than examinations start or another defined time, e.g. five minutes prior to examination start. Thus, access to the documents must be enforceable. Further, it may be preferable that documents cannot be duplicated, e.g. copied, to avoid unauthorised distribution which could render repeating examinations with the same questionnaires impossible. Also, submission of an answer sheet must be appropriately secured. Possibly, access to the answer sheets, once stored and/or submitted must be locked, so as to avoid e.g. duplication of the answer documents or their later amending. Such security measures can be distinguished in an online scenario and an off-line scenario. Generally however, it may be preferred that exam questions and/or exam answers, displayed on a screen of the host computing device where the examinee is taking the examination, are marked, e.g. watermarked, in particular in a to the examinee non-visible way, e.g. using steganography. Such marking may include at least one of the following information. The date, the time, the location of the examination/the remote examination room, an examinee ID, the examinee associated with a personal surveillance device, examination documents and/or answer documents and/or at least one of the first and second personal surveillance devices. Possibly, also at least part of surveillance sensor data may be used when marking the displayed examination content (questions and/or answers).

Further, at least one of the first and second personal surveillance devices may be arranged to detect, e.g. by using surveillance sensor data of at least one surveillance sensor element, an attempt of screen scraping fraud. In other words it may be detected whether an examinee tries to obtain a copy of examination information, e.g. examination data and/or answer data, from the display of the host computing device. Here, the examinee may try to acquire a photo, e.g. by using a smartphone or camera, of the displayed information. At least one of the first and second personal surveillance devices may detect such an attempt of examination fraud, e.g. by analysing surveillance sensor data, in particular using a machine learning and/or artificial intelligence algorithm, to detect a typical behaviour preceding such a fraudulent act. E.g. a characteristic raising of the arm in front of the display while holding a possibly otherwise not allowed smartphone may be an indication of such an attempt of examination fraud, and may be detected from e.g. radar data of a surveillance sensor element. In reaction to such an attempt, the display of examination information may be halted, e.g. the screen blackened or blanked, the attempt may be logged, e.g. securely stored in a personal surveillance device, e.g. the first personal surveillance device, and/or sent directly to the University. Alternatively or additionally, surveillance sensor data using the further surveillance sensor element may be acquired, e.g. an image may be taken of the examinee in the process of taking a picture of the display of the host computing system. This image may then be securely stored in a personal surveillance device, e.g. the first personal surveillance device, and/or sent directly to the University.

In an online scenario, the questionnaire may be retrieved at a defined time prior to the examination or with the start of the examination, while the answer documents are transmitted to the University at the end of the examination. Such could be an automatic transmission, e.g. at the time the examination ends the answer documents are locked and transmitted to the University substantially without interaction from the examinee. This ensures that the examinee can work on the examination literally until the end of the time. In an off-line scenario, the questionnaires need to be provided to the examinee in a substantially inaccessible manner and rendered accessible at a defined time of the examination. Likewise, the examinee may be sent suitable information to retrieve the questionnaire, e.g. an email including an URL to download the examination documents or a QR code for accessing the examination documents. E.g., the questionnaire may be provided in an encrypted format and may either be automatically decrypted at a defined time of the examination for access by the examinee, or the examinee may receive a key for decryption at a defined time of the examination. Such a key may be a password, a decryption certificate, a decryption token, digital signature or the like. The decryption key may in particular allow the decryption only a defined number of times, e.g. one (OTP One Time Password, hash or time based), two or more times, or only allow the decryption in combination with a defined current time, e.g. only on 6 March 2020 from 09:00 to 11:00 hours, in the case that the examination is exemplarily scheduled between 09:00 and 11:00 hours on March 6, 2020.

In the off-line scenario, alternative to the just described time enforced accessibility of the examination documents and enforced examination end time, it may be the responsibility of the examinee to terminate the examination at the appropriate allotted time. E.g., the examinee may close the answer documents and store them at the examination end time as defined by the university, at which time the answer document may be provided with a time stamp and a checksum, preferably in an unalterable manner. Additionally or alternatively, a signature and/or encryption key may be used to securely store the answer document and provide the timestamp and/or checksum. A mark or watermark as described previously may be added to the answer document. This signature and/or encryption key may be the same as the decryption key or may be a different one, e.g. an examinee specific key. This closing of the answer document and thus the termination of the examination may be allowed in a defined time window. E.g. each answer document is considered a valid answer document in the case that the examination is terminated no later than 11:00:30, or in other words up to 30 seconds after the end time of the examination of 11:00 hours. Such would allow the full use of the time allotted for the examination while still retaining a sufficiently large time window for the examinee to terminate the examination and store the answer document. The whole process of accessing the questionnaire and storing the answer document may be automated, monitored and appropriately locked and/or marked to avoid any examination fraud.

Likewise there may be a hybrid scenario, which is a combination of the online and the off-line scenario. In a hybrid scenario, communication between the University and the examinee may only be possible or intended in one communication direction, e.g. either from the University to the examinee or vice versa, from the examinee to the University. E.g. in the hybrid scenario with a connection from the University to the examinee, the University may provide examination data and/or timing data for starting and terminating the examination while the answer data is not immediately transferred to the University but e.g. stored on a local device, e.g. a USB device. Alternatively, in a hybrid scenario with a connection from the examinee to the University, the examination data may have been provided to the examinee ahead of the examination, preferably in a secure and tamperproof manner, in particular in a way so that the examinee may not access the examination data prior to the official start time of the examination. Likewise in the case that access is possible, such access should be monitored and logged, so that the University may thereby determine an attempt of examination fraud. After answering the examination, the answer data may be provided to the University substantially at the time of the termination of the examination, e.g. by transferring the answer data to the University.

To enforce the cleanroom policy in any scenario, the University may provide a suitable device to simplify enforcing the cleanroom policy and for surveillance of the examinee. Such a device may be a personal surveillance device that is connectable to the local computer system of an examinee and providing functionality used for enforcing the cleanroom policy. The personal surveillance device may e.g. be in communicative connection with a computer system associated with the University. Such a personal surveillance device may provide functionality to survey the examinee, in particular while preparing and/or conducting the examination. Such surveillance may in particular also include the space, e.g. a room at the home of the examinee or another suitable venue, where the examinee is taking the examination. Further, alternatively or additionally, such a personal surveillance device may provide the functionality required to allow the examinee to conduct the examination, e.g. may provide functionality to provide questionnaires to the examinee in a secure and tamperproof manner, in particular as discussed before, and/or provide functionality that allows returning answer documents to the University for grading.

Such a personal surveillance device may thus comprise its own network connection to the University or may employ communication capabilities of the computer system of the examinee. The personal surveillance device may comprise a storage element, in particular a secure storage element where external access may be monitored and/or restricted. The personal surveillance device may further comprise a time element, in particular a real time element adapted for determining absolute time and possibly also a location element to determine a current global location, in particular to ascertain an absolute local time at the location where the examinee is conducting the examination.

In order to allow a substantially fraud free remote examination, a personal surveillance device may need to provide a solution to at least some of the following aspects. The University must always be in control of the examination, in particular of the personal surveillance device, either on or off-line, to ensure a fraud free examination. The examinee's location and room allocation must be enforced by ensuring that the examinee is not moving around during exams, e.g. moving in the room, moving the room altogether or possibly only temporarily leaving the room. Likewise it needs to be proven that the examinee's room complies with a clean room protocol prior to and throughout the exam procedure at least until a submission of the answer documents. Finally, it needs to be ensured that the examinee's computer system complies with the clean room protocol to prohibit examination fraud.

The personal surveillance device may be adapted to provide a surveillance service throughout the examination. Specifically, the personal surveillance device is adapted for surveillance of a person, or rather the behaviour of the person. In particular, the personal surveillance device may be adapted to survey a physical space occupied by the person to be surveyed. The personal surveillance device is first surveying the person to be surveyed within said physical space, in particular the behaviour of the person in said physical space.

One exemplary embodiment of the personal surveillance device may be a computing device that is connectable to the computer system of the examinee. E.g., the personal surveillance device may comprise a suitable computer connection like a USB connection so that it can be plugged into a suitable connector on the computer system of the examinee. The personal surveillance device may comprise surveillance elements adapted for surveying the examinee and in particular whether the examinee complies with the cleanroom protocol. The personal surveillance device, when connected to the computing system of the examinee, which is a host computing device for the personal surveillance device, can be arranged to execute a computing environment on the host computing device. Executing a computing environment may be understood as starting or enforcing the start of a dedicated computing environment on the host computing device with the computing environment being used for conducting the examination and in particular for enforcing the clean room protocol on the host computing device, which is the computer system of the examinee. In other words, the personal surveillance device may start the computing environment on the host computing device or may provide the computing environment to the host computing device, e.g. by storing the computing environment for execution on the personal surveillance device, the stored computing environment is then executed by the host computing environment. Here, the host computing device may execute its own operating system whereas the stored computing environment of the personal surveillance device is executed on the operating system. Still further, the personal surveillance device may provide a dedicated operating system for the host computing device, e.g. may allow the starting of an operation system for the host computing device substantially independent from any operating system of the host computing device. In this regard, it may be conceivable that an operating system is booted when the personal surveillance device is inserted into the computer connection of the host computing device. For that, the host computing device may be started to boot the computing environment, or the connection may force a restart of the host computing device to then allow the starting of the computing environment for the host computing device from the personal surveillance device.

The USB connection as used throughout the disclosure however should only be understood as an example of an appropriate communication connection between the personal surveillance device and the host computing device. Generally, any communication connection that is capable to communicatively connect the first personal surveillance device and the host computing device may be employed. In the context of this disclosure, a wired communication connection is particularly beneficial so as to ensure that the personal surveillance device and the host computing device are in close proximity and cannot be separated easily or moved around e.g. as part of a cheating purpose. Using a powered communication connection, i.e. a common communication connection that is also capable of transmitting energy to power the personal surveillance device, may be preferred. Communication connections conceivable in the context of this disclosure may be an HDMI connection, a display port connection, a thunderbolt connection, a FireWire connection, and a local area network connection, e.g. an Ethernet connection, in particular comprising Power over Ethernet (PoE) functionality.

Executing the computing environment on the examinee's host computing device provides sandboxing the examination in the regard that the computing environment will be the only means the examinee can interact with the examination documents, e.g. to answer the examination questionnaire. Exemplarily the computing environment may be a graphical user interface (GUI) that is embedded as a single process and interacting with a filesystem of a memory element of the USB device. On said memory element, the examination documents may be securely stored. Thereby, it may be ensured that examination document files remain on the USB device during processing of these (here: the examinee answers questions). The computing environment/the GUI may be the only means to interact with the examination documents securely stored on the USB device. Hence, examination document files may not leave the USB device at any time. In other words, at insertion of the USB device, a GUI may pop up allowing the user to interact with the examination files. Upon insertion of the USB device, a secure channel/bridge may be built up between the USB device and the host computing environment, and only the computing environment, and application graphical user interface running within said computing environment, can access the files stored on the memory element of the USB device. Access to the examination documents may in particular be read only. The computing environment may be adapted to store answer documents in the memory element of the USB device, in particular in a secure or cryptographically enforced manner. The USB device may thus employed as collecting the answers from the examinee, who may return the USB device to the University for correction. Such would ensure that an answer document was only attended to by the examinee associated with the USB device and verified by the examinee's identity. Alternatively or additionally, the answer documents may be transmitted to the University via an alternative communication connection upon termination of the examination. Such a transmission may possibly require reduced or no authentication, in the case that the answer document is also stored on the USB device in a secured manner, since upon correction, the transmitted version may be compared to the stored version on the USB device, which is stored potentially securely and cryptographically enforced, thereby confirming that the corrected document indeed corresponds to the answers given by the examinee during the examination. Transmitted answer documents may be marked before sending to the university and/or may comprise authentication, in order to allow detection of any attempt of alteration of the transmitted documents.

In particular in the case where the computing environment is executed on a host operating system of the host computing device, an application for answering the examination questions/a graphical user interface may be executed in a dedicated secure manner to ensure that the examinee, at least during the examination time, may only access the application/graphical user interface and not other software elements or functionality of the operating system on the host computing device. Alternatively, to prevent such access by overlaying in an exclusive manner the examinee's host computing device operating system, the examination application or graphical user interface may securely log and report to the University any interaction of the examinee with the host computing environment operating system other than the examination application of graphical user interface. E.g., in case the examinee would minimise the graphical user interface to access a web search engine, such could be logged and a report transmitted to the University. At the University, it may then be decided whether the unauthorised interaction with an element of the operating system other than the examination application or graphical user interface constitutes examination fraud. E.g., an unauthorised interaction of five seconds may be seen as an accident whereas an unauthorised interaction of five minutes may be seen as an attempt of examination fraud. The examination application or graphical user interface, by appropriate measures, may ensure that the examinee cannot access any unauthorised element of the operating system, e.g. may not use means for switching windows like pressing ALT-TAB during the exam period resulting in a very effective control of the examination environment and also simplifying the surveillance needs of the University. Here, the examinee may be seen as being literally locked into the USB device examination application or GUI during the exam, only seeing the questionnaire through the GUI. Other means may be the use of a LockDown^{™} browser or the use of object policies in case the operating system is Microsoft Windows.

Briefly summarising, executing may be understood as running the computing environment on the host computing device by the host computing device starting a dedicated application which is provided by the personal surveillance device for execution on the host computing device. Set application or computing environment may be provided by the personal surveillance device, e.g. stored on the personal surveillance device. Alternatively or additionally, the personal surveillance device is forcing the execution of the computing environment on the host computing device. Adapting to executing a computing environment on the host computing device may in particular be understood as to execute a computing environment arranged for interaction with the person to be surveyed.

This context may differentiate a compliant surveillance status and a non-compliant surveillance status of the examinee. A compliant surveillance status may in particular be a status where the examinee is not attempting an examination fraud by adhering to the examination policies set by the University as well and the cleanroom policy. Any attempt of examination fraud may result in determining the examination being in a non-compliant surveillance status of the examinee. Such determination of a non-compliant surveillance status may result in a report, in particular an automated electronic report of said non-compliant surveillance status, being sent to the University. Alternatively or additionally, upon detection of a non-compliant surveillance status, the examination may be terminated substantially immediately. Still alternatively, the severity of a non-compliant surveillance status may be determined. E.g., using the previous example, a five second non-compliant surveillance status may be seen as an accident and may not lead to an immediate termination of the examination while a five minute non-compliant surveillance status may be seen as examination from and may instantly terminate the examination.

A further personal surveillance device, a second personal surveillance device may be provided and used in conjunction with the previously described personal surveillance device, a first personal surveillance device. Such a second personal surveillance device may be a device that is securely associated with the first personal surveillance device as well as securely associated with the examinee. E.g., the second personal surveillance device may comprise a fixation element that allows the secure fixation of the second personal surveillance device to the examinee. The first and the second personal surveillance device may be in communicative connection and may in particular have information regarding a distance between the first and the second personal surveillance device in order to ascertain whether the first personal surveillance device and the second personal surveillance device are in one another's vicinity. Thereby, it may be determined whether an examinee, with an attached second personal surveillance device, stays close to the first personal surveillance device. With this, the adherence to a cleanroom protocol may be monitored in that it can be determined whether the examinee is moving away from the first personal surveillance device and thus from the host computing device which is used for conducting the examination, possibly even leaving the examination room.

In the context of the further specification, the first personal surveillance device may also be referred to as a USB device, while the second personal surveillance device may be referred to a wristband device or wristband. These references are only for easing the further technical discussion and shall not be construed as limiting either one of the first personal surveillance device and the second personal surveillance device to such a specific embodiment. In particular, the term USB device shall not be construed as a common USB device as known in the art.

The second personal surveillance device or the wristband may be fixable to the person to be surveyed, in particular by employing a fixation element. The wristband may e.g. be a device that may be opened and closed by the person to be surveyed and may in particular detect whether it is in a closed state and may further detect, whether in a closed state the wristband is actually attached to a living host like the person to be surveyed. Affixing or attaching of the second personal surveillance device to the person to be surveyed may be in a defined at least temporarily not reversible manner. In other words, once the second personal surveillance device is affixed to the person to be surveyed, e.g. the wristband is closed around a wrist of the examinee, the second personal surveillance device stays fixed or locked to the person in a secure and in a particular fraud proof manner. The second personal surveillance device may be designed such that a removal from the person to be surveyed without actually opening the second personal surveillance device is prohibited or at least monitored, so that a removal without opening may be detectable. Such a removal may result in a non-compliant surveillance status. Likewise, the second personal surveillance device may have an interaction element, e.g. a switch or lock that can be activated or unlocked by the person to be surveyed. Once activated or unlocked, the second personal surveillance device is adapted to determine said activated or unlocked state, resulting in a non-compliant surveillance status. The second personal surveillance device may communicate to the first personal surveillance device, e.g. the USB device, the status of the lock or in other words whether the second personal surveillance device is affixed to the person to be surveyed, in particular in a correct, irreversible manner and the second personal surveillance device is not removed from the person to be surveyed. In other words, the second personal surveillance device may be adapted to communicate to the first personal surveillance device that the person to be surveyed reliably currently wears the second personal surveillance device. Preferably, the second personal surveillance device may only be active and/or powered up, e.g. by an internal battery, and thereby capable of communicating with the first personal surveillance device in a closed state of the second personal surveillance device, in particular when affixed to a person to be surveyed.

In particular only when it is determined that the second personal surveillance device is affixed to the person to be surveyed, taking of the examination may be possible. As soon as it is determined that the second personal surveillance device is removed from the person to be surveyed, either by accident or by intent, the examination may be terminated. Likewise, the first personal surveillance device and the second personal surveillance device may be adapted to determine a distance between one another, and upon detection that the distance exceeds a previously defined threshold value, access to the examination documents may be prohibited and/or the examination may be terminated. For example, in the case that the person to be surveyed leaves the room intended to conduct the examination in, such may be determined by determining the distance between the first personal surveillance device and the second personal surveillance device and comparing the distance with the threshold value, and upon detection of said being distanced too far, the examination may be terminated.

A personal surveillance system may thus comprise a first personal surveillance device or a USB device and a second personal surveillance device or a wristband.

The USB device executes the computing environment used for conducting the examination on the host computing device/the computing system of the examinee, thereby ensuring the adherence to the cleanroom protocol with regard to the host computing device. Further, the USB device contributes to the surveillance of a person to be surveyed, i.e. the examinee, and in particular the space or room the examinee is located and is about to conduct the examination in. Thus, the USB device also contributes to the adherence to the cleanroom protocol with regard to the location/room where the examinee is taking the examination in. Finally, the wristband shows that an examinee is not distancing themselves from the USB device/the first personal surveillance device to an extent that the examinee cannot be surveyed anymore by the first personal surveillance device. E.g., with the wristband invited to detect a distance between the wristband and the USB device, it may be detected that the examinee is moving out of a surveillance radius, a radius in which the USB device is capable of surveying the examinee and/or the space/room the examinee is taking the examination in, thereby preventing a suitable continuous supervision in order to detect examination fraud. Likewise, in the case that the distance is further increased it may be detectable that the examinee even leaves the room. In both cases, moving out of the surveillance radius and/or leaving the room, the first personal surveillance device may be unable to determine whether the cleanroom protocol is still adhered to, or in other words whether the examinee is potentially using unauthorised material like a book hidden outside of the surveillance radius or in another room or meets with another person for discussing exam questions.

One aspect of the present personal surveillance system can be seen in that the USB device and the wristband work in tandem and in particular only operate, to allow an examinee to take an examination, when linked and activated. However, it can be beneficial to operate both the USB device and the wristband off-line, i.e. not connected to a network, to other devices, to university servers and in particular the internet, to reduce possible attacks to their technology infrastructure thereby rendering the personal surveillance system and in particular the individual person surveillance devices more robust. It may be conceivable that only when an examination starts, during examination, at the end of the examination, when answer documents are sent back to the University or when the examinee needs to take an action, e.g. open or close the wristband, push a button on one of the personal surveillance devices etc. one or both of the personal surveillance devices goes online for exchange of information, e.g. messages, with the University to trigger appropriate actions or transmit information like obtaining examination documents and returning answer documents, or updating and/or verifying certificates.

Both the USB device and the wristband may in particular be uniquely linked so as to ensure that only a linked pair of both devices may be used in conjunction and that there is no way to swap out one of the devices with a different one. Such could be realised with the first and second surveillance devices both comprising a shared secret whereby both the secret of the first personal surveillance device and the secret of the second person surveillance device are required for proper function, in particular function together as a personal surveillance system. Such may be achieved by a custom preparing mechanism after which only a specific wristband is able to communicate with a specific USB device, in particular in a cryptographically enforced way. It may in particular be only under the control of the University that such a pairing may be established and disengaged.

The USB device may act as a central device at the location of the examinee and may act as a bridge between the examinee, the host computing device of the examinee and the wristband, in the case that such is provided, and possibly further third party external devices or computing devices like e.g. a mobile computing device or smart phone adapted to acquire images, e.g. a 360° panorama image, to provide information about the room the examinee is intending to conduct the examination in, in particular whether said room complies with the cleanroom protocol.

In the context of the present disclosure, terms are used as defined as follows and may in particular be contained on or associated with the USB device:

Communication connection/USB connection: a USB connection may primarily serve to power the USB device itself, but also to execute a computing environment/bring up a local app onto the examinee's host computing device. The USB device may establish a secure communication channel with the University as soon as it is connected with the host examinee's computing system. In order to provide this functionality, the USB device may provide standardised cryptography driver support on the examinee's host computing device which could be self-contained on the USB device so that the examinee need not install any driver or special software upfront; a simple connection of the USB device with the host computing device may suffice to execute the computing environment. The USB device may also set up a secure communication with the University's server backend to get updates from the University and to check, validate and update if necessary time reference (RTC), certificates for confirming validity of cryptographic keys and pertaining or verifying examination documents like questionnaires. The secure connection may also be used to return answer documents, i.e. filled in questionnaires by the examinee, to the University. In the case that there are other methods of communication available, e.g. a mobile communication connection via the USB device, then a physical communication connection of the USB device via the host computing device may serve as backup or further communication connection.

When the USB device has its own cellular radio element, the USB device may connect independently from any local network connection over the air, e.g. using a common card wherein embedded in the same, in particular in a secure way, to the University, e.g. server infrastructure of the University thereby establishing a secure two-way data and control channel between the University's server infrastructure and the USB device.

For establishing a radio link between the wristband and the USB device, near field communication like e.g. Bluetooth or a wireless LAN connection may be used. In particular, the radio link may be a secure near field radio link that is only operable in a closely or precisely defined vicinity range or distance between the USB device and the wristband. At least one of the USB device and the wristband may be adapted to detect the (exceeding of the) distance between the two devices or the exceeding of the vicinity range, and may be adapted to identify this exceeding. One such an act of exceeding occurs, the occurrence may be logged in at least one of the USB device and the wristband and/or directly reported to the university.

A particular connection employed may in particular provide sufficient data transfer capacity or bandwidth between the USB device and the wristband for communication purposes. While e.g. a pure NFC occasionally may not provide sufficient bandwidth, such could be used to establish or register a connection between the wristband and the USB device, e.g. by bringing the wristband the USB device in close proximity, while possibly subsequently employing a more potent communication interface like Bluetooth or wireless LAN. Likewise, the wristband and the USB device may be connected by a wired communication connection. In such a scenario the defined length of the wired connection automatically determines whether the examinee, the person to be surveyed, remains in the vicinity of the USB device, in particular after the wristband, the second personal surveillance device, has been attached to person to be surveyed. A wired connection of sufficient length may not impact the ability of the examinee to conduct the examination in any substantial way.

The personal surveillance device, i.e. the USB device, may comprise certain surveillance sensor elements, in particular for surveying the examinee, or more generally a person to be surveyed, in particular a physical space occupied by the person to be surveyed. One such example of a surveillance sensor element is an optical sensor element, e.g. a camera element. Such a surveillance sensor element may have a particular extended field of view to allow simplified acquisition of the space the examinee is intending to take the examination in, to more easily ascertain adherence to the cleanroom protocol. In other words, the larger the field of view of a single acquired image, the less likely it is that the examinee is able to hide unauthorised material or people in a blind spot, a spot not acquired by the respective image. Such a surveillance sensor element may e.g. be a 180° or half-sphere sensor element or possibly even be a 360° full-sphere sensor element.

Such an acquired image or images may be required as proof that the room the examinee is taken the examination in complies with the cleanroom protocol, as defined by the University. Such image or images may be acquired at the beginning, the end and/or at defined intervals during the examination or at arbitrary, random times during the examination to prevent the examinee from disobeying the clean room protocol after initially acquiring an image where the room complies with the cleanroom protocol. Such a cleanroom protocol may meet a minimum standard of "minimalism" as defined by the University that are ideally the same or similar conditions as when taking an exam on the University premises. In particular a room complying with the cleanroom protocol may exhibit only a chair, a clean desk, one post computing system, no books, no persons, and a closed door. Ideally, the image acquisition as proof of adherence to the cleanroom protocol, may be continuous. However, as this may be seen as excessive and too intrusive, acquiring a first 360° image of the examinee's room just prior to starting the examination and potentially just after the examination is terminated may be sufficient. A further surveillance sensor element, having a different sensor type, may be used in conjunction with the acquisition of optical sensor data. E.g. an electromagnetic radiation sensor element or radar sensor element may acquire image data substantially continuously, in particular starting before acquisition of optical image data starts and continuing until after finishing acquisition of the optical image data. This way, the electromagnetic radiation sensor may suffice for establishing the continued adherence to the cleanroom protocol while the intermittent optical sensor data may indeed verify the adherence without the need for a specific analysis or evaluation but simply by looking at the image data by a person, e.g. supervising the examination. The image sensor data potentially also includes a visual proof that the examinee effectively wears the wristband and that the examinee is indeed the examinee claimed to be.

The image can either be taken by a sensor element that may be embedded in the USB device. Alternatively or additionally, the image proving adherence to the cleanroom protocol may be taken by another mobile device, e.g. a smart phone associated with the examinee. Such a mobile device may comprise an application associated with the University, preferably cryptographically linked to the University's server backend. The mobile device may be in communicative connection with the USB device or may employ its own communication connection, e.g. a mobile communication connection, to communicate with the University, in particular transmit the acquired image data. The mobile device and/or the application may be logically linked to the USB device so that it is ensured that only a defined device of the examinee may be used to acquire the images to prove adherence to the cleanroom protocol. The mobile device may be identified by credentials within the application on the mobile device or by further technical means like identifying the mobile device by an SEID or the IMEI of the mobile device. In particular, it may be ensured that only the registered mobile device and/or the registered app of the University can be employed for acquiring the images and transmitting the images to the University. A radio link between the examinee's mobile device and the USB device may be provided and may employ secured and/or cryptographically linked radio link. Such a radio link using a short range communication connection ensures that the mobile device employed for acquiring the images indeed is in the vicinity of the USB device. The images may be transmitted via the short range communication connection to the USB device, which in turn forwards the image data to the University either by using its own communication connection or employing a communication connection via the examinees host computing device.

Alternatively or additionally, the mobile device, e.g. via the University app, may send the image data via a different communication connection, e.g. through the mobile communication connection of the mobile device. Such a combination allows the ability to ensure that the images are acquired in the vicinity of the USB device while not relying on a potentially low bandwidth communication connection like a short range communication connection or near field communication connection. In particular in the case that additional image data is acquired throughout the duration of the examination, e.g. every 10, 20, 30 seconds, one minute, two minutes, and five minutes et cetera the bandwidth of a short range communication connection may not be potent enough to transmit the image data sufficiently fast to avoid a backlog. In the case however that the image data is transmitted from the mobile device to the USB device and from the USB device to the University, additional steps of verifying and/or signing the images may be avoided by maintaining a chain of trust via the USB device acting as a central hub.

The USB device may be required to be location aware. In other words, the USB device is able to determine a relative and in particular absolute position of the location where the USB device is currently located at. The location may e.g. be determined at the start of the examination and may subsequently verified or reacquired during the examination to detect a possible movement of the USB device. An absolute position may be determined by a global positioning system like Galileo, GPS or GLONASS. Alternatively or additionally, a relative position may be determined, e.g. by triangulation of known radio sources, like for examples cell tower triangulation of cell towers of a mobile communication network. This may allow determination that a specific position is maintained, while no specific knowledge about the absolute position is available or required. This may suffice, since in the context of this disclosure it may be particularly relevant to determine that an examinee does not significantly change their position after the start of the examination while information about an absolute position may neither be required nor desired in light of data privacy regulations. Other forms of triangulation may include Wi-Fi radio sources and/or Bluetooth radio sources.

Alternatively, the relative position the USB device in a room may be established by acquisition of electromagnetic radiation image data or an acceleration sensor data. E.g. a representation of the room may be acquired by the radar data, and any relative movement within the room may subsequently be derivable from the newly acquired radar data. In other words, it may be determined that the USB device, the examinee, the wristband and/or the host computing device is relocated within the room, and to what extent. The radar sensor thus may operate self-referenced and detect being moved around. Thereby, an external (absolute) position reference, e.g. for triangulating a precise position relative to a referential point, may not be required. The radar sensor itself, with the acquired image data, may be sufficient to detect when it's being moved around in the remote examination room. Likewise, the acceleration sensor may determine a movement. Here, it may suffice to detect that some or all of the USB device, the examinee, the wristband and/or the host computing device may not move more than a defined distance, so to prevent relocation of the

The use of such a location, either absolute, relative or self-referenced, may implement geofencing features. E.g. the USB device may determine its own location and further ensure that both the wristband and the USB device are at the same location within the same geofence and do not get separated. Staying within said geofence may be part of the cleanroom protocol. E.g., the USB device may determine a location and in particular continue to determine during the examination that the location does not change while at the same time, e.g. substantially continuously, maintain a short range communication connection with the wristband. This may allow the determination that also the wristband stays within the defined geofence without the need of having a separate, dedicated location detection element on the wristband. Additionally or alternatively, the location detection element may be arranged on the wristband. At the beginning of an examination, the examinee may interact with an interaction element on the USB device and/or the wristband, e.g. push a button on the wristband, to activate the determination of the current position and substantially locking the position for the duration of the examination. Instead of pushing a button, a similar function may be activated in the computing environment, e.g. the application or graphical user interface employed for taking the examinations. Once a location has been set as a start location for the examination, the USB device and/or the wristband may monitor, substantially continuously or at defined or arbitrary time intervals, whether the current location has changed from the start location. The geofence may allow a certain variation in position before a non-compliant surveillance status is determined.

The USB device may further comprise a (contactless) smartcard reader or a similar identification element. Such an identification element may be used in conjunction with an identification card or the like, e.g. a student card of the examinee, to determine the identity of the examinee. Such may be done by contacting and reading a processing chip of the ID card/smartcard or by contactless communication with the card, e.g. by communicating with a NFC radio link. This allows the examinee to identify and authenticate themselves.

In case of a personalised USB device, an examinee's ID may be exclusively associated with the respective USB device by the University, e.g. being programmed into the USB device. Examinee's ID preferably is stored both on wristband and on USB device in a secure and tamper-proof manner. Indeed, the examinee's ID coinciding on the wristband and on the USB device may be required to enable a communication between the wristband and the USB device. Likewise, in the case that the examinee's ID is preregistered with the USB device and/or the wristband, it may suffice that the examinee identifies themselves versus one of the USB device and the wristband in an off-line scenario without requirement of an online verification by the University. E.g. only in the case that the correct ID is provided to the USB device and/or the wristband, the USB device grants access to the examination documents stored on the USB device. Alternatively or additionally, it may be conceivable that a USB device comprises a plurality of examination documents for a plurality of examinees and upon presenting a certain examinee's ID to the USB device and/or the wristband, the correct examination documents for that examinee are accessible. Even further, when one of a plurality of stored examinee's IDs is presented to one of the USB device and the wristband, the USB device determines the current, absolute time and provides access to an examination document that both complies with the requirements of the ID of the examinee and the current time. This allows that a single USB device is used to conduct examinations for a plurality of examinees and a plurality of exams per examinee. For example, examinee 1 on day 1 at 9:00 hours may have access to examination 1, and at 11:00 hours to examination 2. Further, examinee 2 on day 2 at 9:00 hours may have access to examination 1, and at 11:00 hours to examination 2. In a preferred scenario, the USB device is associated with a single examinee but potentially with a plurality of exams, whereas the access to the individual exams is granted or denied dependent on absolute time.

The examination documents may comprise one or more of a questionnaires with questions to be answered, the schedule of the exam and, after the examinee has taken a particular examination, the answer documents to that examination as answered by the examinee. The scheduled granted or denied access to a particular examination, in the case of a plurality of examinations are stored on the USB device. Likewise, instead of or additionally to storing examinations on the USB device, the examination documents, in particular the questionnaires may be obtained from a remote storage location, e.g. from a University server, dependent on the schedule of the exams. Access to the exams via the schedule may be based on a cryptographic method such as PKI and/or certificates providing means of key validity in time used to cipher, load, unlock, relock, store and sign the exam documents in a secure and unique per examinee way and resistant to tampering, respecting authenticity, confidentiality, integrity, and availability. As mentioned before, several questionnaires may reside here if the examinee needs to pass several exams, therefore simplifying the process of personalising the content of the USB device while maintaining uniquely cryptographically protection.

The wristband may comprise a presence detector. Such a presence detector may ensure that the wristband indeed is located at the examinee's wrist. Such a presence detector may be an IR detector e.g. used for heart rate detection, pulse detection or oxygen measurement. The presence detector may be substantially only detecting the presence of a suitable body part, e.g. a human arm or wrist, or may also detect specific identification features of the body part that allows identification of as examinee e.g. by detecting a specific blood flow pattern, blood vessel pattern or other uniquely identifying markers comparable to e.g. fingerprints.

The wristband may be securely linked to the USB device, e.g. by secure radio communication in particular near field communication connection or short range communication connection; alternatively or additionally by a wired connection.

The wristband and/or the USB device may comprise a secured memory module and/or processing element storing various personal or other information of the examinee while protecting said information. Such information may be the examinee's full student card ID information (name, date of birth, section, origin, gender etc.), the University pre-programmed examinee's GPS position that was declared upfront or that the examinee may be able to program once just before the exam when in front of host computing device used for taking the exams and just about to start the exam, e.g. by pressing a button. The location, e.g. GPS coordinates or other means of identifying an absolute, relative or self-referenced position, may be stored in a tamper-proof manner and protected by the secured memory module and/or processing element. Further information may comprise the GPS location to lock in (e.g. shortly before starting the examination, when examinee pushes the button) and further compare real-time GPS position continuously with said locked position, in a cryptographically enforced manner.

The wristband may further comprise at least one trigger element, e.g. one or more switches that are activated when wearing the wristband, i.e. when the wristband is closed. Such trigger elements may act as an arming trigger for the personal surveillance system including the USB device and the wristband. A further trigger element or switch may be provided for the examinee programming its current GPS location just prior to starting the examination. It is conceivable that this switch only works once per examination session. It may be conceivable that the reuse of this location settings switch may only be rearmed by the University. Likewise, a dedicated switch to end an examination may be provided, alternatively opening the wristband may provide the functionality of terminating the examination. Dedicated safety measures may be provided to avoid unintentional opening of the wristband and thereby unintentionally terminating the examination. Upon termination of the examination either by opening the wristband or by triggering the end termination switch, access to the examination documents may be reversed, the answer document locked and any answers transmitted to the University for grading.

The wristband may be used to enforce the examinee's location. In one scenario, the examinee may provide its remote location where the exams are intended to be taken upfront to the university, which will program and secure this location into the wristband and/or the USB device, possibly together with the examinee's ID. Subsequently, the USB device and/or the wristband may be delivered to the examinee. Alternatively, the location be programmed once by the examinee by pushing a button, e.g. for 3 seconds, as described before. Here, the wristband's embedded location detection element will determine the current location and cryptographically securely store it. Further alternatively, the wristband may embed a hardware-enforced location tracker that is getting armed once the wristband is closed at the beginning of the exam period. Getting armed means that the location tracker will now track every movement and log any irregularity, e.g. a non-compliant behaviour like leaving a geofenced area.

The case that the examinee needs to leave the room, e.g. needs to pause the examination in order step out for a moment may be implemented as the possibility to allow the examinee to unarm the wristband geo-localisation enforcement temporarily, e.g. for 1 to 2 minutes or another defined timespan. A timer element may be provided counting down the defined timespan. In this scenario, tracking may remain active with the event being logged by either the USB device or the wristband. Alternatively, the examinee may activate a defined pause examination function, implemented e.g. with the intention to allow stepping out, which is appropriately logged, in order to determine that such may not be per se a non-compliant behaviour. A further sensor element, e.g. a sound sensor element or a microphone, e.g. provided at the wristband, may be activated to determine whether the examinee remains silent during this stepping out timespan, thereby complying with the cleanroom protocol, or whether examination fraud is attempted, e.g. by talking with a further person or typing on a keyboard of a computer separate from the host computing device used for taking the examination.

Closing the wristband, or activating a start examination trigger, may actively and officially enter the examinee into the exam period at the moment the examinee closes the wristband around his wrist or activates the trigger, and the exam may be stopped as soon as the examinee opens the wristband or activates the trigger again. Once the wristband has been opened, a closing may or may not restart the remainder of the examination duration. Once the defined examination time has elapsed, the USB device and/or the wristband may trigger an event comparable to opening the wristband or activating the examination trigger in an automatic and enforced manner, thereby terminating the examination. Such an elapse of examination time may be determined by a timer element in at least one of the USB device and the wristband or alternatively may be sent from the University via a suitable communication link to at least one of the USB device and the wristband.

Consequently, opening / closing the wristband as well as moving around inside (or outside) a defined geofence area may be registered by the wristband and may be reported back to the USB device. The USB device may analyse this behaviour and may take appropriate action, e.g. terminating the examination prematurely in case a non-compliant surveillance status is detected, e.g. by leaving the geofence area. Wristbands may be provided by the University for a single or a plurality of exams. They may be prepared and personalized for a particular examinee.

The University may program the wristband with the examinee's ID details the university is in possession of plus the examinee's GPS location, where the remote examination is to take place. This information is securely stored in the wristband and is ephemeral that is, once examinations have occurred, the information may be invalidated but not erased and remains in the USB device and/or the wristband until the University decides to remove the information, e.g. for dispute use cases and until the complete exam period is over and the examination results are officially agreed on and a particular examination procedure is closed for the examinee the USB device and/or the wristband was associated with. If there is no dispute and the exam score is given and accepted by examinee and University, the USB device and the wristband may be erased for next usage and reprogrammed for other examinees.

The programming of a wristband and/or USB device, i.e. the provisioning of the device with examinee and/or examination data, may occur at University's premises by University allowed employees or may be done OTA (Over The Air). For OTA provisioning, data to be stored on the wristband may be provided via the USB device, where the USB device is programmed by the University in a first step and subsequently, the USB device provisions the wristband by using the short range communication connection between the USB device and the wristband.

A potential usage flow may be as follows. A student is the examinee who needs to pass one or more exams, which are given by the University. The student exists and officially is part of the University's program. Preferably, the student has a student ID card, e.g. with his name printed on the card and including an officially taken photograph. Alternatively, the student may have been issued a smartcard based ID card, which is capable of communicating contactless, e.g. by using nearfield communication (NFC) or a contacted communication, e.g. in accordance with IS07816. The student may have a phone number registered with the University, e.g. stored in a Student Personally identifiable information (PII) database, which may serve for multifactor authentication (MFA).

In order to take the examination, the University may prepare, personalize and uniquely link a first personal surveillance device, e.g. a USB device, and a second personal surveillance device, e.g. a wristband together and with personal identification information of the student, e.g. the examinee's ID information. In order to provision the devices used for the remote examination the University may employ a dedicated application in conjunction with University's various native databases (Students Pll, exam questionnaires, schedules). In other words, the identity of the examinee may be linked to the first personal surveillance device and the second personal surveillance device and further examination data, e.g. examination documents may be stored on one of the personal surveillance devices, e.g. on the first personal surveillance device. It may in particular be beneficial to cryptographically protect against tampering the whole remote examination setup, e.g. by using cryptography key management, certificates and secured access to a time server to allow determining and enforcing the examination times. Preferably, the first personal surveillance device and/or the second personal surveillance device may comprise an embedded real-time clock, which may in particular be synced with the University's time server in order to have a well aligned time when, in particular in an off-line examinations scenario, to check the certificate validity and hence the cryptographic keys validity, and to enforce the examinations time allotted to a particular examination. A onetime password may be applied additionally to unlock the USB device. Alternatively or additionally, a combination of a FIDO2 authentication or a MFA may be applied in addition to the USB device password.

In preparation of the examination, the University may send the USB device and the wristband to the examinee, or the examinee may collect the devices on the University premises. In order to obtain the devices, the examinee may be required to identify themselves to the University, e.g. by showing his student ID card or an official government ID. The examinee may have the USB device and the wristband for a prolonged period of time, e.g. multiple days or even weeks or months, e.g. a full semester. On days where there are no examinations scheduled, the USB device and the wristband substantially may remain inert so as to avoid tampering with the device and/or examination data possibly stored on the USB device. By using e.g. a low power mode in conjunction with a timer element, the USB device may be adapted to determine the time and date and may compare said information with a pre-set examination schedule for determining whether the devices may be activated or shall remain inert.

The wristband and USB device may thus only unlock and operate only on the days where exams are scheduled, e.g. by employing a locally stored cryptographic certificate and a local (synced, secured) RTC and time reference as part of the USB device.

On any other day other than an examination day, when the examinee is trying to operate one of the USB device and the wristband nothing may happen. E.g. in the case that the examinee would be inserting the USB device in e.g. the host computing device or would try to wear the wristband on their arm, a notification may be sent to the University but the devices themselves may remain inert on any other day than an exam day. Maintaining the devices in an inert state may minimize attack vectors in case an examinee would like to hack the devices in order to commit examination fraud.

On the day of the exam, at the location where the examinee is intending to conduct the remote examination, the examinee may insert the USB device into a host computing device, e.g. the personal computer of the examinee. Once the examinee has inserted the USB device, a computing environment may be executed on the host computing device. Here, either the host computing device is executing the computing environment on its operating system or the USB device is forcing the execution of the computing environment upon insertion of the USB device in the host computing device. Alternatively, the host computing device may be in an off state and after inserting the USB device in an appropriate communication receptacle, the host computing device may be switched on and may execute the computing environment, possibly comprising its own operating system, e.g. by booting from the USB device.

Once the computing environment is executed on the host computing device, a first window may appear on the computer screen of the host computing device. The examinee may now enter a PIN, a password or any other appropriate means of identification e.g. using their student ID card or a nonofficial government issued ID card to authenticate and unlock the USB device. Additionally or alternatively, the login information just used or an additional login may be used to link the current login to the identity of the student, e.g., by using a password or generally login information that is linked to the student and/or the ID card of the examinee. It may be beneficial that when verifying the logon credentials, correctness may be verified by secure communication between the University and the USB device. Alternatively, a second authentication factor may be provided to the examinee, e.g. by sending the factor to the examinee's registered mobile phone number alternatively or additionally, the PIN or other logon credentials may be provided shortly before the examination to the examinee, e.g. via a mobile messaging service. The university backend also may host a web service Relying Party (RP) and an associated Web Authentication (WebAuthn) component in conjunction with a FIDO2 authenticator and client on the examinee side to yield for a password less authentication. If password and authentication is verified, the USB device may check the validity of certificates or other cryptographic keys or elements stored on one of the USB device and the wristband while possibly a provided time element or real-time clock (RTC) may be synced in background as well. Awareness of a correct time may be provided using time information of e.g. a Galileo, GLONASS or GPS system, a trusted time server, e.g. hosted by the university that may be securely connected to from the USB device over a secure NTP protocol. Such may require a communication connection between the USB device and a server on the Internet, in particular a communication connection with the University that may employ a communication connection between the USB device and the host computing device, which in turn is connected to the Internet and thus possibly to a University server using the examinee's ISP connection. The communication between the USB device and the server/University server may be cryptographically protected, e.g. using OpenPGP, TLS 1.3, SSH, or generally a virtual private network connection and using e.g. secure network time protocol. Alternatively or additionally, the communication between the USB device and the server/University server may employ a mobile communication connection, e.g. using an embedded eSIM to establish a cellular connection. Cryptographic protection may be used additionally. The communication connection may be a unidirectional connection, thus allowing only communication in one of the upstream or downstream direction, or may be a bidirectional connection to allow communication between the USB device and the server in both directions. Such a communication connection may be used as a control and/or service link between the University and the USB device and/or for data transfer between the USB device and the University. The computing environment may provide information to the examinee, in order to allow the examinee to determine whether all technical, administrative and logistical requirements for conducting the examination have been met.

In particular, the USB device may be surveying the remote examination room with at least one surveillance sensor element, in order to establish a compliant status, e.g. an adherence to the clean room protocol, of the examinee. Thus, an electromagnetic radiation sensor element or radar sensor element may be surveying the remote examination room, in particular to establish a data representation of the remote examination room for self-referencing and to survey the behaviour of the examinee. Preferably, the electromagnetic radiation sensor element or radar sensor element may be activated and acquiring sensor data as soon as the USB device is connected to the host computing device and/or powered and may terminate acquisition of surveillance sensor data only when being disconnected from the host computing device or being powered down. The electromagnetic radiation sensor data may be stored in the USB device, in particular in the secure memory element, in order to allow a host computing device independent and/or communication connection (e.g. to the University) independent storing of the surveillance image data.

The examinee, while being surveyed at least by the electromagnetic radiation sensor element, may now attach the wristband to themselves, e.g. by closing the wristband around a wrist thereby locking the wristband in a temporarily un-removable state closely attached to the examinee. Closing the wristband may activate a (preprogramed, unique) pairing or communication connection between the wristband and the USB device. A successful establishing of the pairing or the communication connection may be indicated to the examinee via the computing environment. The paring may use an authenticated key exchange protocol to securely establish a secure and uniquely protected connection between both surveillance devices.

The examinee may now be required to prove their adherence to the cleanroom protocol. Therefore, the examinee may acquire imaging information of the room they are intending to take the examination in. The image information may be one or a succession of photos, preferably resulting in panoramic image information, e.g. hemispherical or spherical image information. In particular preferred is the acquiring of a 360° panoramic photo. To obtain the required image information, a surveillance sensor element arranged on one of the USB device and the wristband may be employed. Preferably, the surveillance sensor element is arranged on the USB device, which is situated such that when connected to the host computing device, suitable image information of the room the examinee is taking the examination in may be acquired. Alternatively or additionally, the examinee may use a further image acquisition device, e.g. their mobile phone or smart phone comprising a camera sensor element. For acquiring valid images for proving adherence to the cleanroom protocol, a dedicated application provided by the University may be used on the image acquisition device. Thus, the examinee may use a University provided app to take a panoramic image of their room where the remote examination is supposed to take place.

The image acquisition device and the dedicated University application may be managed through a separate communication channel, e.g. a mobile connection with a specific University server backend. Preferably, images taken by a further image acquisition device are sent via a suitable communication connection, e.g. using Bluetooth or a further close proximity communication connection to the USB device. Such may allow the verification by the USB device that the acquired image information indeed originates from the dedicated University application (e.g. using watermarking or digitally signed photo). By verifying the image data on the USB device, no communication connection with a server/University server may be required. Thus, such USB device verification may be employed in an off-line scenario. The image data may then be stored on the USB device, e.g. in a secure memory element, that is tamper-proof, to enable the University, if desired, to analyse the image information at a later time. The image data may be cryptographically signed in particular including an absolute time stamp. Alternatively, the USB device may send the image information to the University, either before, during or after the examination so that the University may eventually review the acquired image information to ascertain the adherence to the cleanroom protocol. Sending the image information via the USB device may create a further cryptographic link between the USB device, the wristband, the image information, the dedicated application for acquiring the images from and the University.

Preferably, the acquired image information includes the examinee themselves, thereby proving that they are already wearing the wristband and not somebody else. Likewise, the examinee may present a suitable ID card, preferably comprising a visual identification, e.g. a picture, of the examinee. In the case that the image information is sent to the USB device, the USB device may verify the identity by extracting suitable verification information about the examinee from the acquired image information, e.g. by extracting the verification information from the ID card depicted in the image information and then comparing the verification information with the examinee, e.g. by comparing the image on the ID card with the examinee. To further verify and authenticate the wristband, a computer readable symbol may be depicted on an appropriate display element on the wristband, which symbol may either be presented to a surveillance sensor element of the USB device and/or may be acquired when acquiring the image information as described, to verify the adherence to the cleanroom protocol.

The presenting and acquisition may be seen as closing the lock-in loop of the examinee. The wristband may thus display e.g. a unique QR code, in particularly jointly generated by both the first and second personal surveillance devices. Further, employing a unique identification, e.g. examinee's ID, possibly including further a shared secret of the first and second personal surveillance devices it may be assured that the examines does not wear a fake wristband, but rather the one in communication connection with the USB device. Thereby, the wristband and thus the examinee wearing the wristband is locked to the first personal surveillance device, which itself is physically linked to, i.e. plugged into a suitable port on, the host computing device of the examinee. Energy required to operate the first personal surveillance device (i.e. the USB device) is exclusively received from the examinee's host computing device. In order to maintain the powered connection, it may not be possible to move around but rather provides a location lock-in of the first personal surveillance device. Additionally, the electromagnetic radiation sensor element has acquired data representation of the remote examination room for self-referencing, so that any movement of any part of the surveillance setup (in particular the first personal surveillance device, second personal surveillance device, the host computing device and/or the examinee), in particular without the remote examination room, may be reliably detected and possibly subsequently analysed in order to determine any attempt of examination fraud. The provision and display of a computer readable symbol, e.g. a uniquely generated QR code shown on the wristband, may be seen to compensate for a possible lack of security when employing a radio link like e.g. Bluetooth between the first personal surveillance device and the second personal surveillance device. Here, since the computer readable symbol may be generated using trade distributed secrets among the first and second personal surveillance device, and additional encryption, authentication and/or identification communication layer may be implemented on the otherwise less secure radio link.

Optionally, an examiner may now analyse the image information sent by the examinee to ascertain whether the examinee adheres to the cleanroom protocol. Thus, the examiner may analyse from the image data whether the room depicted in the image information complies with the standards set by the University for a remote examination room. Artificial intelligence and/or machine learning algorithms may be employed to assist the examiner in determining the adherence to the cleanroom protocol. E.g., the image information is generally inspected by the artificial intelligence and/or machine learning algorithms and only in the case that the algorithm detects a suspicious setting, the examiner is informed to manually review the findings of the Al. Thereby, it may be quickly determined whether there is unauthorised material present in the room which could be interpreted as examination fraud. Likewise, it may easily be determined that material that resembles unauthorised material may indeed not be unauthorised material. E.g., an identified book which is a novel rather than a textbook may not be considered unauthorised material in a scientific examination.

In the case that such an online validation of the image information is performed, information may be sent back via the communication channel used by the USB device to the examinee to either confirm that the room is accepted as an examination room or is not accepted. Optionally, information may be provided to identify issues that need resolving before the start of the examination in order to accept the room as an examination room, and confirm that the examination room is adhering to the cleanroom protocol. If the cleanroom check is passed, according status information may be sent to the computing environment and may be shown in the same windows that was used for password entering and that still may be active, now informing the examinee that the clean-room policy is met and they may proceed to the next step. Now, a location or reference location of the examinee, at least one of the USB device and the wristband and/or the examination room may be acquired. The examinee may first push an interaction element e.g. a button, on the wristband. Alternatively or additionally, a separate interaction element may be provided on the USB device. The interaction element on the wristband and/or the USB device may, upon a first interaction, may initiate the establishing of the secure link between the first personal surveillance device and the second personal surveillance device. A second interaction on either one of the devices may initiate the generation of the computer readable symbol on the wristband. Yet another interaction may initiate the acquisition of surveillance sensor data, from either the first surveillance sensor element and/order the second surveillance sensor element, in order to establish adherence cleanroom protocol, in particular to allow commencing with of the examination. The respective interactions may be in any suitable order and not necessarily the order is just described.

In order to ensure that the examinee is not using a fake wristband and to show that it is indeed the examinee that wears the wristband the interaction element may be preferably arranged on the wristband itself. Thereby, the wristband is rendered a necessary device, which the examinee must wear and be in possession of, in order to be able to interact with the interaction element, e.g. push the button. Pushing the button may capture and define, at least for the duration of the following examination, an absolute, relative or self-referenced location. A small geofencing area may be generated, taking into account to allow the examinee move around at least in the remote examination room where the remote exam is supposed to take place. Pushing this button may also trigger a mechanism on both devices, wristband and USB device, ensuring they will not be physically separated or switched off. According status information may be presented in a window on the computing environment. The cryptographic links between the devices may ensure that the examinee is not wearing a "fake" wristband, thus a device that only visually corresponds to an actual wristband, since the functionality of the wristband for the possible location locking.

Generally speaking, when the wristband is closed, a fixation element on the wristband may be closed so to securely affix the wristband to the examinee. Closing the wristband may automatically activate, i.e. power up, the wristband. Additionally or alternatively, the closing of the wristband may initiate a connection between or establishing a link between the wristband and the USB device. The wristband and/or the USB device may comprise an interaction element that, when engaged, initiates the generation of an identification code, on at least one of the wristband and the USB device or both. The identification code may correspond to a computer readable symbol, e.g. two-dimensional code or barcode. Upon initiation of an interaction element, the wristband may display the computer readable symbol, the identification code or a code uniquely corresponding to the identification code on a display of the wristband. The USB device may acquire, with at least one of the surveillance sensor elements, e.g. a camera element, an image of the wristband displaying the computer readable symbol while being worn by the examinee. The image may further comprise image information on the examinee, so that the identity of the examinee may be verified, e.g. by comparing the image with image information stored in relation to the examinee's student ID or official ID. Still further, the acquired image may allow the determination that the wristband is indeed worn by the examinee.

In the case that the previous steps are successful, then the computing environment may switch to a secure mode of interacting and the examination documents may be presented to the examinee. E.g. a window containing the exam questionnaire may be opened automatically or examinee-triggered, where the computing environment presents the examination documents to the examinee for conducting the examination. Here, the computing environment may take complete control over examinee's host computing device and/or the screen surface, rendering it impossible for the examinee to switch to other applications as long as the computing environment is in a secure mode of interacting, a test of the examination mode. Here, the computing environment may present a graphical user interface to the examinee while all OS related workbench items are inactive and/or fully overlaid by the GUI. This GUI may also act as the single entry and visible point to the examinee through which the questionnaire will be displayed. The GUI may further provide appropriate means for the examinee to answer the questions of the examination. Extracting the questionnaire or any other examination related information should be prohibited by the computing environment, including the answers the examinee will provide now. To prevent filming of photographing the examinee taking the examination, the displayed content on the screen of the host computing device may be marked, so that in case information is made publicly available, the origin of this information may be determined. The examinee may now take the examination on the host computing device executing the computing environment in the secure mode of interacting.

Cryptographic certificates linked to cryptographic keys may ensure the examination GUI and the associated questionnaire only unlock and open at the time specified by the University in a defined examination time schedule. Preferably, the taking of the examination is fully managed by the USB device. That includes the Exam GUI and associated questionnaire being displayed and active only during the defined examination time according to the schedule the University entered during provisioning of the wristband + USB device. The only possibility to shortcut may be if the examinee was to (early) terminate the examination, e.g. by opening the wristband as a clear and non-revocable indication that the examinee is intending to finish the examination. Appropriate measures may be provided on the wristband to avoid accidental opening of the wristband. E.g., a wristband lock may be a secure lock or a double lock, so that two consecutive unlocking steps are required in order to open the wristband.

Even during the secure mode of interacting of the computing environment the initial window used for entering login credentials may remain open and/or accessible or may be blended into an Exam window as an embedded element. By maintaining access to a possible communication channel with the University, the University may be contacted in case of issues and may be able to provide instructions or at least information to the examinee. When the defined examination time expires, the examination documents may lock and an answer document may remain in the state it was at exam time expiration. The answer document may then be transmitted to the University substantially immediately and/or may be stored, in particular in a secure and tamperproof manner, possibly marked, on the USB device, e.g. in a secure memory element. In the case that the answer document has not been transmitted to the University, the examinee may be required to return at least the USB device to the University for retrieval and subsequent grading of the answer document.

According to an embodiment of the present disclosure, one of the first surveillance sensor element and the second surveillance sensor element may be an electromagnetic radiation sensor element, in particular a radar sensor element and the other one of the first surveillance sensor element and the second surveillance sensor element may be an optical sensor element, in particular a camera sensor element.

According to a further embodiment of the present disclosure, at least one of the first surveillance sensor element and the second surveillance sensor element is adapted for generating surveillance sensor data of surveying a physical space and/or a person in a physical space, wherein the generated surveillance sensor data may be securely stored in the personal surveillance device.

According to a further embodiment of the present disclosure, the personal surveillance device may be adapted to survey a physical space and/or a person in a physical space and the personal surveillance device may be adapted to generate surveillance status information indicative of a surveillance status of the physical space and/or the person in the physical space.

More generally, the first surveillance sensor element and the second surveillance sensor element may be sensor elements of a different sensor modality or of a different sensor type. Examples for the different sensor modalities or different sensor types may be as follows: the first surveillance sensor element and the second surveillance sensor element may be an element out of the group consisting of an optical sensor element, an acoustic sensor element, electromagnetic radiation sensor element, a camera element, a hemispherical (180°) camera sensor element, two hemispherical (180°) camera sensor elements forming substantially 360° field of view, a spherical (360°) camera sensor element, a motion sensor element, an electromagnetic radiation motion sensor element, a sensor element using reflection of emitted electromagnetic radiation, a radar element, a LIDAR element, a sound sensor element and a microphone element, insofar they comply with the prerequisite of being of different type/modality.

A preferred combination of sensor types may be the combination of a radar sensor element and a camera sensor element. E.g. the radar sensor element may provide a substantially 360° surveillance of the room the examinee is taking the examination in. Radar may be preferably penetrating objects within the room, so to be able to survey the whole room. By using radar, it may be possible to detect objects within the room, or more generally within the space to be surveyed, which may not be detectable by further sensor types. E.g. a radar sensor element may penetrate a table on which the host computing device is situated, thereby virtually looking under the table to ascertain whether an authorised objects are hidden. E.g., in the case that a book or a further computing device which could provide an authorised access to information to the examinee is hidden underneath a table top, such could be detected by using a radar sensor element but possibly not using a camera sensor element. A radar sensor element may thus "look around" corners or behind or through furniture to detect objects, which other sensor elements may not detect. Further, a radar sensor element may ascertain a three dimensional reference view of the remote examination room, thereby being able to recognise a possible relocation of the host computing device and the personal surveillance device attached thereto. Likewise, a person temporarily entering and/or hiding in the room may be easily detectable.

A radar sensor element may be acquiring sensor data that allows detection of a possible non-compliant surveillance status, e.g. by penetrating objects, furniture and the like, while at the same time the sensor data is not sufficiently detailed to provide any immediate privacy issues. E.g., radar data may not allow the immediate identification of a certain situation and/or a person within the room, due to the structure of the sensor data. Thus, in the case that a non-compliant surveillance status is detected by the personal surveillance device using a radar sensor element, which is a surveillance sensor element, at least one further surveillance sensor element may be triggered to acquire a different type of surveillance sensor data, which different type provides additional information about a situation and whether said situation relates to a compliant surveillance status or a non-compliant surveillance status in order to removing potential doubts. The at least one further surveillance sensor element may e.g. be an optical sensor element or a camera sensor element for acquiring images of the surroundings of the first personal surveillance device for determination of a compliant or non-compliant surveillance status. The optical sensor element may acquire individual images or may acquire a succession of consecutive images, e.g. a video. Alternatively, or additionally, a further surveillance sensor element may be a sound sensor element. In combination, an optical sensor element and a sound sensor element may be arranged to acquire video data with sound. This may allow the ability to acquire images of the immediate vicinity of the first personal surveillance device while the sound sensor element or microphone may acquire the situation of what is happening in the examination room of the examinee possibly not visible to the optical sensor element.

The radar sensor element may be a sensor element in the range of e.g. 24 GHz or possibly higher in the range of 60 to 77 GHz. A radar sensor element employing such frequencies may be preferably arranged to acquire radar sensor data of a substantial distance from the radar sensor element while at the same time being able to send the radar to penetrate through material in order to ascertain radar data. The acquired radar data may also be used to determine whether and if so to what extent the personal surveillance device has been moved while the examinee is taking the examination. For example, minor relocation in position may be allowed while a relocation of more than 2 m may result in a non-compliant surveillance status. The radar sensor element may thus provide a volumetric scan of the room to ascertain whether the cleanroom protocol is adhered to and whether this situation changes during the examination. As such, the radar sensor element may determine movements of a first and/or second personal surveillance device, presence of a person in the room/within the surveyed space.

Alternative to the radar sensor element or additionally, a sound sensor element may be provided and activated substantially continuously. Such would allow the volumetric surveillance of the room where the examination is taken in, while a sound sensor element may be provided for monitoring for attempts of examination fraud, which would not be detectable by a radar sensor element. E.g., surveillance sensor data of a radar sensor element may be unable to detect a simple verbal communication between the examinee and a further person, e.g. hiding behind a wall in adjacent room or connected to the examinee by further communication means, e.g. radio contact between the examinee and the further person. In particular, the examinee may read out aloud questions, thereby transmitting said questions to the further person, who in turn researches the answers and transmits back the answers to the examinee. Such a behaviour may not be detectable by a radar sensor element, however by a sound sensor element, at least the reading out aloud of the questions by the examinee may be detected.

The surveillance sensor data generated by a surveillance sensor element may be transmitted to the University either permanently during the examination or only in the case that a non-compliant surveillance status is determined. The University may then view the surveillance sensor data and may determine whether indeed there was a non-compliant surveillance status, or in other words examination fraud happened. Alternatively or additionally, the surveillance sensor data may be stored, in particular securely stored, in the personal surveillance device. E.g. a secure memory storage element may be provided in the personal surveillance device for storage. Such a secure storage element may have restricted access such that only the University may access data stored on the personal surveillance device. Data stored on the personal surveillance device may be encrypted or unencrypted, marked or not marked. In particular in the case that only the university is able to access data stored in the secure storage element, it may suffice to store the data unencrypted. Likewise, even in the case that access is restricted to e.g. the University, data may be encrypted additionally. The memory storage element may be accessible by the University remotely, e.g. using functionality of the computing environment executed on the host computing device, or the University may require physical access to the personal surveillance device in order to access data stored on the memory storage element. The memory storage element may be the same or a different memory storage element used to securely store examination data.

From the acquired surveillance data, surveillance status information indicative of a surveillance status may be generated. A surveillance status may be understood as one of a compliant surveillance status or a non-compliant surveillance status. A compliant surveillance status may in particular be understood as the absence of an attempt of examination fraud, e.g. in that the examinee is complying with all requirements of the University, in particular complying with the clean room protocol. A non-compliant surveillance status may be a status where the examinee is attempting examination fraud by not complying with the requirements of the University, in particular by not complying with the clean room protocol. Here, the examinee may employ unauthorised materials, like a book or access to the Internet to research an answer, or may simply get assistance from outside, e.g. a further person. The personal surveillance device may in particular determine or detect surveillance events. A surveillance event may be any detection of surveillance sensor data, which is subsequently analysed and reflects the current status of the examinee, or in other words the current behaviour and situation of the examinee. A detected surveillance event may indicate that the examinee is complying with all requirements set by the University during the examination, in particular that the examinee is complying with the cleanroom protocol. Such detection of a surveillance event may thus result in the determination of a compliant surveillance status. Likewise, when analysing the surveillance sensor data, a detected surveillance event may be indicative of a non-compliant surveillance status in the case that the analysis of the surveillance sensor data results in the determination that the examinee attempts examination fraud or more generally does not comply with the cleanroom protocol as specified by the University.

In particular, the continuing analysis of the surveillance sensor data may result in the determination of a continuing compliant surveillance status. In the case that the analysis results in the determination of a non-compliant surveillance status, such determination may result in the detection of a surveillance event. In other words, while the occurrence of a surveillance event may be indicative of a non-compliant surveillance status it is not required to specifically detect surveillance events which are indicative of a compliant surveillance status.

A non-compliant surveillance status however may also be a status where the personal surveillance device only assumes an attempt of examination fraud, e.g. because the surveillance sensor data is analysed and, falsely, the analysis is indicative of such an examination fraud. In such a scenario, surveillance sensor data may be reviewed by the University, specifically an employee of the University, to determine whether examination fraud indeed happened or whether the non-compliant surveillance status was the result of a false-positive evaluation of the surveillance sensor data by the personal surveillance device. The determination of a compliant or non-compliant surveillance status may also be based at least in part on the fixation status of the further personal surveillance device or wristband to the person to be surveyed, in other words whether the wristband is determined to be fixed to the person to be surveyed. Likewise, the distance between the first personal surveillance device and the second personal surveillance device may be used to determine a compliant or non-compliant surveillance status. Here, in the case that the person to be surveyed moves further away from the first personal surveillance device then specified by the clean room protocol, the surveillance status may switch from a compliant surveillance status to a non-compliant surveillance status, possibly simply because the distance may not allow sufficient surveillance of the person to be surveyed by the surveillance sensor elements to reliably determine whether the person to be surveyed attempts examination fraud. A non-compliant surveillance status may likewise be triggered by detection of at least one further person or generally upon detection of a non-authorised behaviour, the same behaviour that a violating the cleanroom protocol.

According to a further embodiment of the present disclosure one of the first surveillance sensor element and the second surveillance sensor element, during a defined surveillance time span, may be surveying a physical space and or a person in a physical space substantially continuously, and the other one of the first surveillance sensor element and the second surveillance sensor element, during the defined surveillance timespan, may be surveying the physical space and/or the person in the physical space non-continuously, in particular may be surveying the physical space and/or the person in the physical space only upon detection of a surveillance event indicative of a non-compliant surveillance status by the one of the first surveillance sensor element and the second surveillance sensor element.

According to a further embodiment of the present disclosure at least one of the first surveillance sensor element and the second surveillance sensor elements, during a defined surveillance time span, may be surveying a physical space and/or a person in a physical space substantially continuously, surveillance data of the first and/or second surveillance sensor element may be stored temporarily in the personal surveillance device, in particular as a loop of a defined length, and upon detection of a surveillance event indicative of a non-compliant surveillance status, the temporarily stored surveillance sensor data is retained in the personal surveillance device, and otherwise the stored surveillance sensor data is discarded or overwritten after a defined time period.

Here, the personal surveillance device may be surveying the person to be surveyed, e.g. the examinee during the examination, with a surveillance sensor element that is capable of providing a substantially completely volumetric surveillance of the room the examinee is taken the examination in. E.g. a radar sensor element having a sufficiently high frequency may be adapted to obtain surveillance sensor data surveying substantially the complete volume of the room. However, while such surveillance sensor data may be sufficient to determine a surveillance event or in other words a compliant or non-compliant surveillance status, the surveillance sensor data of that sensor type may be not sufficient to allow in particular in a legally valid way to prove said non-compliant surveillance status. In other words, while a radar sensor element could obtain surveillance sensor data, that, when appropriately analysed, allows the determination of a surveillance event indicative of a non-compliant surveillance status, such radar sensor data may be inadequate to actually prove examination fraud. E.g., in a court of law, mere radar sensor data may be insufficient to convince the judge or a jury that an examinee actually conducted or at least attempted examination fraud.

To ease such a burden of proof, the personal surveillance device, upon detection of a surveillance event, thus the assumed or actual examination fraud indicated by the non-compliant surveillance status, may activate at least one further surveillance sensor element, which may allow more easily proving or potentially disproving the attempted examination fraud. The so acquired surveillance sensor data of the at least one further surveillance sensor element may then be analysed to determine whether the examinee indeed attempted examination fraud. All data of all surveillance sensor elements may be synchronized and receive a tamperproof timestamp. That way, a post-mortem analysis may be easily conducted by appreciating all recorded surveillance sensor data referenced to one another by synchronized timestamps that were applied at recording time. Such timestamp information may e.g. be embedded as an invisible watermark directly into the sensor data itself without altering the data or making/having the watermark visible.

For particular attempt of examination fraud it may not be sufficient to only acquire further sensor data from the time point where examination fraud is assumed by the detection of a surveillance event indicative of a non-compliant surveillance status. Thus, having further sensor data from the time during the examination before detection of the surveillance event, may significantly ease proving that the examinee attempted examination fraud. It may thus be beneficial, while continuously surveying the examinee via one surveillance sensor element, to at the same time at least temporarily store further sensor data of at least one through the surveillance sensor element. Exemplarily, while the examinee is a permanently surveyed by a radar sensor element, the examinee is also substantially permanently surveyed by at least one further sensor element. Only a certain amount of surveillance sensor data of the further surveillance sensor elements, going back in time a defined length, however is stored, e.g. in the personal surveillance device. In other words, further surveillance sensor data of at least one further surveillance sensor element is temporarily stored for a defined period of time. After that time and in the case that no surveillance event was detected, the further surveillance sensor data is discarded or overwritten. Such may essentially result in a loop of a defined length of further surveillance sensor data being acquired substantially permanently. E.g., the last five minutes of further surveillance sensor data may be acquired and temporarily stored e.g. on this personal surveillance device. Further surveillance sensor data corresponding to sensor data older than those five minutes are discarded or overwritten. In case of detection of a surveillance event, said further surveillance sensor data may be retained for further analysis, e.g. may be forwarded to the University or may be securely stored, e.g. in the secure memory element of the personal surveillance device, for later access. The length of the loop may be set by the University and may in particular be examination dependent. In other words, the length of the loop may be parameterisable by the University. Retaining may in particular mean securely storing and in particularly applying a (tamperproof) timestamp.

According to a further embodiment of the present disclosure the computing environment may be arranged for interaction with the person to be surveyed, and the defined surveillance time span may be at least a part of the time span the person to be surveyed is interacting with the computing environment, in particular may be the time span a secure interacting mode of the person to be surveyed with the computing environment is active.

Here, when the examinee is about to start conducting the examination, the personal surveillance device executes the computing environment on the host computing device, thereby providing an examination environment to the examinee, to take the examination. As with any on-premises examination, the examination time comprises of preparation time before the actual examination, the examination time where the examination is taken, e.g. the questions are presented to the examinee and answers given by the examinee are counted towards grading of the examination, and a post examination time after closing of the examination. In the remote examination scenario of the present disclosure, there is a preparation time after commencing the execution of the computing environment but before the actual start of the examination. E.g., the examinee may conduct certain tasks required to comply with the cleanroom protocol after commencing the execution of the computing environment but before starting the examination. Such may be a sweep of the room the examinee is about to take the examination in with a surveillance sensor element, maybe identifying themselves to the system, closing the wristband and establishing a connection between the wristband and the USB device as the personal surveillance device. When everything has been prepared and at least upon start of the actual examination, e.g. by granting access to the examination documents, the cleanroom protocol must be observed.

Thus, during the preparation time and the post examination time, it may not be necessary to survey the examinee and thus the surveillance timespan may only be the timespan of conducting the actual examination. Likewise, surveillance sensor data a defined time period before the start of the examination may be acquired and stored, so to be able to ascertain that the examinee has complied with the cleanroom protocol from the very start of the examination. E.g., in case an examination starts at 9:00 hours, the start of acquiring surveillance sensor data may commence some time before the start, e.g. at 8:55 hours. Likewise, the surveillance timespan may extend to 5 minutes after the actual end of the examination. In particular, the acquisition of surveillance sensor data may commence substantially with connection of the first personal surveillance device with the host computing device, or with start of the execution of the computing environment on the host computing device.

Taking the examination may be separated in a secure interacting mode and a non-secure interacting mode. In the secure interacting mode, technical measures may be in place and either monitor adherence to the cleanroom protocol, in other words a behaviour of the examinee corresponding to a compliant surveillance status or actively enforce adherence to the cleanroom protocol, e.g. by disconnecting Internet access or disabling switching of applications, so that only the examination application is active, visible and accessible by the examinee. The secure interacting mode may thus be a mode where the measures monitor or enforce the behaviour of the examinee in order to take the examination and in which mode an attempt of examination fraud may lead to the result of failing the examination. It is thus relevant to survey the examinee during the secure interacting mode so that any non-compliant behaviour is detectable.

According to a further embodiment of the present disclosure, the surveillance status information is indicative of a compliant surveillance status and/or a non-compliant surveillance status, in particular the personal surveillance device enables the interaction of a person to be surveyed with the computing environment in the case of a compliant surveillance status and prohibits and/or terminates the interaction of the person to be surveyed with the computing element in case of a non-compliant surveillance status.

In other words, as long as the personal surveillance device determines that the examinee is complying with the cleanroom protocol and thus does not attempt examination fraud, access to the computing environment is granted to allow conducting the examination, e.g. allow entering of answers into the system. In the case that the personal surveillance device detects a non-compliant surveillance status and thus assumes examination fraud, access to the computing environment may be, at least temporarily, prohibited. E.g., the computing environment may inform the examinee of said non-compliant status and request correction of the behaviour of the examinee. E.g., the examinee is wandering the room during the examination, for example in order to think, thereby possibly moving out of the field of view of a surveillance sensor element, the personal surveillance device may inform the examinee that this wandering may be seen as a non-compliant behaviour and prohibits continuing with the examination until the examinee again sits down. Additionally or alternatively, the personal surveillance device may terminate the examination upon detection of a non-compliant surveillance status. Termination may in particular mean that the examination is either automatically failed completely or further entry of answers is prohibited from the time the non-compliant surveillance status is detected thus examination fraud is assumed. Still further, an examination may not be terminated prematurely upon the determination of a non-compliant surveillance status. In other words, even in case a non-compliant surveillance status is detected, e.g. there is an assumption of examination fraud, the examinee may be allowed to continue with the examination and may normally end the examination. However, surveillance sensor data is stored and/or provided to the University for further analysis, and in case examination fraud is established, the University may decide on appropriate measures. E.g., the University may decide that the examination is failed, need to be repeated or is graded with a punitive mark. In order to inform the examinee, an indication at the end of the examination may be presented to the examinee informing the examinee that actions were detected which potentially may correspond to an attempt of examination fraud and will be analysed subsequently by the University.

The personal surveillance device may be arranged to, in a first step, prohibit the further interaction of the person to be surveyed with the computing environment in the case that a non-compliant surveillance status is detected, and in the case of repeated offences, terminates the interaction permanently. E.g., the examinee may get one or two warnings of a detection of a non-compliant surveillance status, thereby allowing the examinee to correct his behaviour, while a second or third warning results in the termination of the examination. Likewise, the personal surveillance device may determine a severity of a non-compliant behaviour and either prohibits the interaction or terminates the interaction. E.g., in case of a repeated wandering of the examinee, the personal surveillance device, e.g. via the computing environment, may continue to inform the examinee about the non-compliant behaviour and requests termination of said behaviour, but does not terminate the examination, since a mere wandering may not necessarily correspond to an attempt of examination fraud. Contrary hereto, the reading of a book may result in termination of the interaction with the computing environment even at the first attempt, as reading a book during a closed book examination may be seen as a substantial violation of the cleanroom protocol.

According to a further embodiment of the present disclosure, the personal surveillance device may further comprise a time element adapted to provide time information, in particular absolute time information and depending on the time information interaction, in particular secure interaction, with the computing environment may be enabled or prohibited.

According to a further embodiment of the present disclosure, the computing environment may be arranged for interaction with persons to be surveyed, wherein interacting with the computing environment comprises two different modes of interacting, a regular mode of interacting and a secure mode of interacting and wherein the secure mode of interacting may be enabled in the case that the surveillance status information indicates a compliant surveillance status.

Such a time element may allow the determination of an appropriate start time of an examination and an end time of an examination. In particular, such a time element may allow the determination of a time where the computing environment switches into or enables a secure interacting mode and likewise may allow the determination of a time where the computing environment switches out of or disables a secure interacting mode. The switching into or enabling a secure interacting mode may correspond with the start of an examination while the switching out of or disabling the secure interacting mode may correspond to the end or termination of an examination. E.g. the examinee may use the personal surveillance device to execute the computing environment on the host computing device in good time ahead of the set start time of the examination in order to get everything ready, e.g. perform authentication and identification and establish prior to the start of the examination adherence to the cleanroom protocol. This time before the start of the examination may in particular be the regular mode of interacting with the computing environment. A regular mode of interacting may in particular be a non-secure, non-surveyed mode, where the examinee is substantially allowed to use the host computing device without restrictions, and is in particular not required to comply with the cleanroom protocol. The enablement of the secure mode of interacting may in particular require that certain prerequisites are fulfilled by the examinee, e.g. the examinee is identified and authenticated e.g. versus the University and the personal surveillance device establishes adherence to the cleanroom protocol. In other words, the switch to or enablement of the secure mode of interacting may only be performed in the case that the personal surveillance device determines a compliant surveillance status by the surveillance sensor data acquired from at least one of the surveillance sensor elements. The secure mode of interacting may further in particular be a mode where the examinee is by at least one of the surveillance sensor elements.

At the time before the official start of the examination, in the regular mode of interacting, the examinee may e.g. freely use the computing environment and/or the host computing device, but in particular may not access examination documents, since the secure interacting mode has not been enabled yet. In this scenario, in the case that examination documents are stored on the personal surveillance device, these documents may not be accessible yet. The examination documents may only be accessible once the secure interacting mode is activated. The correct time of activating said secure interacting mode and thus allowing the start of the examination may thus be determined by the time element. The computing environment, in particular in the case that all requirements necessary for allowing the start of the examination have been fulfilled, may automatically switch into the secure mode of interacting on the correct examination start time as indicated by the time element. The time element may provide information about an absolute time and the computing environment may compare the current absolute time with a defined start time of the examination, e.g. as provided with the examination documents.

Alternatively or additionally, the computing environment may retrieve examination documents e.g. from the University at a specified time prior to the start of the examination or at the start of the examination while relying on the time information provided by the time element. E.g., to ensure that the latest examination documents are available for conducting the examination, the computing environment may retrieve the examination documents no earlier than a defined timespan before the official start of the examination, e.g. not more than 15 minutes before the official start of the examination. This in turn allows the University to provide amended or updated examination documents until close to the start of the examination. Still further, the computing environment may have information regarding a document version of the examination documents and may compare, e.g. by connecting to the University, whether a current examination version corresponds to the examination version available, e.g. stored on personal surveillance device. In the case that the document version corresponds to the locally stored document version, said version is used for conducting the examination, otherwise an updated version of the examination documents may be retrieved e.g. from the University. Alternatively, an update to the examination documents may be pushed by the University to the USB device prior to the start of the examination.

According to a further embodiment of the present disclosure, the personal surveillance device may be adapted to disable and/or terminate the secure mode of interacting when the surveillance status information indicates a non-compliant surveillance status.

During the activation of the secure mode of interacting of the examinee with the host computing environment or in other words during the examination, the examinee may be substantially continuously surveyed by at least one surveillance sensor element in order to establish whether the examinee complies with the requirements of the University or whether the examinee attempts examination fraud. Upon detection of such a non-compliant surveillance status, relating to the examinee not complying with the cleanroom protocol the personal surveillance device and executing the computing environment on the host computing device or the computing environment may disable and/or terminate the secure mode of interacting, thereby switching to the regular mode of interacting. With the switch from the secure mode of interacting to the regular mode of interacting, the examination may be terminated. This switch from the secure mode of interacting to the regular mode of interacting and/or termination of the examination may occur upon the first detection of a non-compliant behaviour and thus upon the first indication of a non-compliant surveillance status, or alternatively the computing environment and/or the personal surveillance device may allow for a defined number of indications of a non-compliant surveillance status before effectively terminating the examination. E.g. upon the first determination of a non-compliant surveillance status, the secure mode of interacting may be (briefly) disabled and e.g. a pop-up window is shown by the computing environment to the examinee informing the examinee of the detected non-compliant surveillance status with the option to remedy the situation. Thus, in case the examinee has accidentally not complied with the cleanroom protocol, e.g. wandering the examination room thereby distancing themselves further from the personal surveillance device than possibly allowed, the examinee may again comply with the cleanroom protocol to continue the examination. Upon detection of an (again) compliant surveillance status, the secure mode of interacting may be reactivated and the examination may continue. This (temporarily) disabling of the secure mode of interacting may be performed a defined number of times, e.g. defined and preset by the University, while after reaching the limit defined by the defined number of times, the examination may be terminated without the possibility to reactivating or continuing the examination. Depending on the protocol of the University, such termination may immediately default to a failing of the whole examination or answers given until the time of the termination may be taken account when grading the examination.

According to a further embodiment of the present disclosure, the host computing device may be executing a host operating system and the personal surveillance device may be adapted to execute the computing environment on the host operating system or the first personal surveillance device may be adapted to directly execute the computing environment on the host computing device.

In the first alternative, the host computing device may be running its own operating system. E.g., the host computing device may run an operating system like Microsoft Windows, Apple MacOS or a Linux derivate. The computing environment may thus be an application adapted to be executed on the respective operating system. The computing environment may be executed by the examinee, e.g. by the examinee starting the respective application containing the computing environment, which application may be stored on the personal surveillance device, in particular in a secure memory element. E.g. when connecting the personal surveillance device to the host computing device, the host computing device may allow access to a part of a memory element where the computing environment is stored. The examinee may then start the computing environment, e.g. by double-clicking the associated application. The computing environment is made in particular to be stored in a secure memory element, which may prohibit the reading out of the computing environment by the examinee, so to avoid tampering with or altering the computing environment as an attempt of examination fraud by e.g. disabling certain surveillance functionality of the computing environment or to grant access to examination documents while not complying with the clean room protocol and in particular not during the actual examination. Alternatively, the computing environment may be started automatically, e.g. by a suitable routine executed by the personal surveillance device, upon insertion or connection of the person surveillance device with the host computing device.

In the second alternative, the computing environment may in itself be an operating environment or operating system that is executed directly on the host computing device. E.g., the personal surveillance device may be connected to the host computing device while the host computing device is still powered off. After powering on the host computing device, the host computing device may access the computing environment stored on the personal surveillance device and may directly execute the computing environment as operating system on the host computing device, in particular without executing a further operating system like Microsoft Windows, Apple Mac OS or a Linux derivate. In other words, the computing environment may comprise an operating system that is directly booted from the personal surveillance device when the host computing device is powered on with the personal surveillance device connected appropriately. In case of a USB device, the USB device may comprise a memory element that is accessible by the host computing device upon boot and which stores the operating system into which the host computing device then boots. Having a substantially exclusive operating system as part of the computing environment further strengthens the tamperproofness of the computing environment and makes an attempt of examination fraud more difficult to an examinee. The computing environment may then comprise a further application used for conducting the examination. With such a computing environment executed on the host computing device, adherence to the cleanroom protocol may be simplified for the examinee, e.g. in that the computing environment itself disables any possibility of connecting to the Internet for researching answers to questions of the examination.

According to a further embodiment of the present disclosure, the at least one communication element of the first personal surveillance device and the communication element of the second personal surveillance device may be an element out of the group consisting of a wireless communication element, a wired communication element, an electromagnetic radiation communication element, an optical communication element, an acoustic communication element, a short range communication element, a wireless LAN communication element and a mobile communication element.

The use of such communication element may enable the first personal surveillance device and the second personal surveillance device to reliably communicate with one another. Further, certain types of communications may allow the detection of the distance between the first personal surveillance device and the second personal surveillance device. E.g. a wired communication element may limit a radius of movement of the person to be surveyed while wearing the second personal surveillance device. Likewise, an electromagnetic radiation communication element, in particular a short range communication element may allow the determination of the distance by determining a certain attenuation between the first personal surveillance device and the second personal surveillance device. For example, a short range communication element may be unable to establish or maintain a communicative connection between the first personal surveillance device and the second personal surveillance device unless both devices are closer than a specified threshold distance. Also, using an optical communication element and an acoustic communication element may substantially rely on the existence of a line of sight between the first personal surveillance device and the second personal surveillance device. A mobile communication element may e.g. triangulation of cell towers to establish a position of one personal surveillance device relative to the other personal surveillance device.

According to a further embodiment of the present disclosure, the second personal surveillance device may be a device out of the group consisting of a wearable device, a smart device, a wristband, a necklace, a ring and an ankle bracelet, wherein the fixation element may be arranged to securely affix the second personal surveillance device to a body part of the person to be surveyed so to be generally non-removable in a closed state of the fixation element.

By employing such types of second person surveillance devices, an anatomical structure of the person to be surveyed may be employed to ensure the substantially non-removability of the second personal surveillance device from the person to be surveyed without opening the fixation element. E.g., a wristband or ankle bracelet may describe a circular doughnut shaped structure completely surrounding a body part of the person to be surveyed like a wrist or an ankle whereby a distal body part of the person to be surveyed like a foot or a hand may prohibit the removal of the second personal surveillance device by simply sliding off of the second personal surveillance device from the body part of the person to be surveyed by the hand or the foot having a larger diameter than the wrist or the ankle, such that a secure affix to the respective body part may be ensured, at least without damage to the second personal surveillance device or possibly injury to the person to be surveyed.

According to a further embodiment of the present disclosure, the second personal surveillance device may comprise a sensor element for detecting a biological property of the person to which the second personal surveillance device is affixed to, wherein the sensor element may in particular be an optical sensor element, an acoustic sensor element, an infra-red sensor element or a laser sensor element and wherein the biological property may in particular be a heartbeat, an oxygen level, a tissue structure, a blood vessel structure, a skin structure or a fingerprint, in particular of the person to be surveyed.

The sensor element may first detect whether the second personal surveillance device is attached to a structure of a human being or rather a living person. This avoids that the second personal surveillance device is attached to an inert, in particular non-living, structure like a log of wood only simulating the wrist of the person to be surveyed. The sensor element may thus prevent that the person to be surveyed attached the second personal surveillance device to a structure other than themselves. Additionally or alternatively, e.g. by a known tissue structure or a known blood vessel structure, it may even be conceivable to identify the person to be surveyed. For example, the examinee may register a tissue structure or blood vessel structure where normally the wristband is attached to your examination with the University ahead of taken the examination and may subsequently be identified by wearing the wristband in essentially this registered location. Such may provide identification and authentication of an examinee to be the person to be surveyed. This may subsequently is the administrative burden on the examinee but also on the University prior to the examination.

According to a further embodiment of the present disclosure, the second personal surveillance device may further comprise a display element adapted to display a computer readable symbol, wherein at least one of the first surveillance sensor element and the second surveillance sensor element may be adapted to acquire the displayed computer readable symbol.

According to a further embodiment of the present disclosure secure mode of interacting may only be enabled after a valid computer readable symbol is displayed on the display element and was acquired by at least one of the first surveillance sensor element and the second surveillance sensor element.

E.g., the display may depict a symbol, e.g. a two-dimensional code, e.g. a QR code, which symbol is then acquired by one of the surveillance sensor elements of the first personal surveillance device. The symbol may be identifying the wristband and or the person to be surveyed and may further identify a closed and locked state of the wristband around the body part of the examinee. The symbol may be a mathematical and/or cryptographic computation with a unique result in time and space of a unique specific prepared pair of first and second surveillance devices, in particular also unique with regard to the exam questions, time, an examinee's ID, a location. The two-dimensional code shall be displayed once the examinee has closed the wristband and pushed a button, preferably on the wristband, to initiate the symbol being displayed. It may further be conceivable that information is than sent from the second personal surveillance device to the first personal surveillance device for to initiate and/or indicate readiness for acquiring such a code and optionally to provide information from the second personal surveillance device to the first personal surveillance device on the generated two-dimensional code, e.g. to verify and acquired code by the first personal surveillance device to be a correct code, in particular to be a code associated with the linked second personal surveillance device.

Here, the symbol may only be shown once the wristband is securely locked to the person to be surveyed, in particular after pressing a button. In the case that the first personal surveillance device and the second person surveillance device are not permanently linked to one another, the person to be surveyed may substantially employ any available second personal surveillance device, may attach said second personal surveillance device to themselves, show the appearing symbol to the first personal surveillance device, thereby linking the first personal surveillance device with the second personal surveillance device, either for a plurality of examinations, e.g. for all examinations of the current examination period, or simply just for the examination that is about to start.

In case the second personal surveillance device, e.g. by the sensor element for detecting a biological property of the person to which the second personal surveillance device is affixed to, is adapted for identifying and/or authenticating of the person to which the second person surveillance device is affixed to, the computer readable symbol may also be indicative of the identification and/or authentication of the person to be surveyed. E.g., the examinee may use a wristband for conducting an examination, may close said wristband around their wrist, upon which the wristband by using the biological sensor detects the identity of the examinee and subsequently generates and/or shows the symbol on its display to be read by at least one of the first and second sensor elements of the first personal surveillance device. Only after the first personal surveillance device has acquired a symbol from the second personal surveillance device validly identifying and/or authenticating the examinee, a subsequent switch to the secure mode of interacting of the computing environment may be allowed. Alternatively, upon detection of a valid symbol, the secure mode of interacting may be activated substantially immediately.

Further, the symbol may be unique with regards to at least one of the first personal surveillance device and the second personal surveillance device so that only a defined pair of personal surveillance devices may be used for conducting the examination. In order to do that, at least one or both personal surveillance devices may participate in computing the symbol, potentially relying on the communication connection between the first personal surveillance device and the second personal surveillance device. The generation of the symbol may rely on secrets known to only either one of the personal surveillance devices and may also comprise a time component, e.g. a current (absolute) time, potentially acquired by the time element of the first personal surveillance device. Additionally or alternatively, the symbol or code may be unique with regards to an examinee's ID that was pre-stored during personalization of the first personal surveillance device, a content, a date of exams. In particular, a hash function may be used in relation to the information used to generate the unique symbol or code.

Thereby a unique cryptographic closed loop between an examinee wearing a wristband, the first personal surveillance device and the second personal surveillance device may be established

According to a further embodiment of the present disclosure, the determination of the surveillance status information may employ analysis of data acquired by the first surveillance sensor element and/or the second surveillance sensor element and in particular may employ an artificial intelligence and/or machine learning algorithm and/or digital signal processing, wherein the algorithm may be executed by at least one of the first personal surveillance device, the second personal surveillance device and at least one back end device to which the personal surveillance system is communicatively connected to by the at least one communication element of the first personal surveillance device.

The analysis of the data may be performed locally in one of the first personal surveillance device and the second personal surveillance device. For the local analysis, the first personal surveillance device and/or the second personal surveillance device may rely on a trained artificial intelligence algorithm or machine learning algorithm, which was trained prior to conducting the examination regarding surveillance sensor data representing a compliant and non-compliant behaviour. The training of the model/algorithm may in particular be performed in a computing environment other than the personal surveillance system. E.g., the training may be performed by the University using University computing systems. Such would allow the analysis of surveillance sensor data only locally using the surveillance sensor system and thus there is no need to transmit surveillance sensor data, thereby improving the privacy of the person to be surveyed. In the case that the analysis of the surveillance sensor data identifies a non-compliant behaviour, the surveillance sensor data may then be securely stored in the memory element of the first personal surveillance device, to be analysed at a later point, e.g. by the University, or may be transmitted immediately e.g. to the University for further analysis augmented assistance. Dependent on the analysis of the surveillance sensor data, either locally or remotely by the University, the examination may be interrupted or terminated.

After conducting the examination, a dataset comprising at least part of the surveillance sensor data acquired during the examination may be sent for improving the artificial intelligence algorithm/machine learning algorithm. The dataset may in particular be anonymized to avoid data privacy issues. The algorithms or models may thus be further trained by using the dataset of the actual examination. Subsequently an improved algorithm or model may be transferred to the surveillance sensor system to be used in subsequent examinations.

According to a further embodiment of the present disclosure, at least one of the first personal surveillance device and/or the second personal surveillance device may further comprise an interaction element adapted for interaction with the person to be surveyed, wherein interacting with the interaction element may enable a switching between the different modes of interaction with the computing environment, wherein a switch from the regular mode of interacting to the secure mode of interacting may only be enabled when the surveillance status information indicates a compliant surveillance status.

In other words, the interaction element may be employed as an indication from the examinee to the surveillance sensor system that the examinee is ready to start the examination. E.g., the examinee has put on the wristband and is engaging with the interaction element to indicate that the examinee is ready for taking the examination. Subsequently, the surveillance sensor system may employ surveillance sensor data to determine whether the examinee complies with the cleanroom protocol. Before or after engaging with the interaction element, the surveillance sensor system may have established the identity and authenticity of the examinee. E.g. after having put on the wristband, the examinee may engage the interaction element which in turn triggers the generation of the symbol to be displayed on the display of the wristband. The symbol may then be acquired by at least one surveillance sensor element, e.g. may be shown to a surveillance sensor element by the examinee, while the same or a further surveillance sensor element acquires in addition to the symbol and image of the examinee and further sensor data from the room the examinee is about to take the examination in. The personal surveillance system may thus determine that the examinee wears the wristband, may further determine the identity of the examinee and the compliance with the cleanroom protocol. Essentially, the personal surveillance system may determine that all prerequisites for taking the examination have been fulfilled by the examinee, subsequently switching to the secure mode of interacting which allows the examinee to take the examination. The regular mode of interacting may thus be seen as an exam preparation mode while the secure mode of interacting may be seen as an exam taking mode.

According to a further embodiment of the present disclosure, at least one of the first personal surveillance device and the second personal surveillance device may further comprise an interaction element adapted for interaction with the person to be surveyed, wherein interacting with the interaction element may enable the acquisition of image information by at least one the surveillance sensor elements, wherein the acquired image information may comprise at least one of the computer readable symbol, the examinee and the wristband.

The wristband and/or the USB device may comprise an interaction element that, when engaged, initiates the generation of an identification code, on at least one of the wristband and the USB device or both. The identification code may correspond to a computer readable symbol, e.g. two-dimensional code or barcode. Upon initiation of an interaction element, the wristband may display the computer readable symbol, the identification code or a code uniquely corresponding to the identification code on a display of the wristband.

The interaction element may be arranged on at least one of the wristband and the USB device. Arranging the interaction element on the wristband may allow to assure that an image that is acquired when engaging the interaction element shows both hands/wrists of the examinee, one wearing the wristband and one pressing the interaction element on the wristband. Thereby it may be assured that the examinee properly wears the wristband. Alternatively or additionally, arranging the interaction element on the USB device may allow to assure that the wristband and thus the examinee is in close proximity of the USB device, as otherwise they would not be able to engage with the interaction element. Still further, it may be conceivable that both the interaction element on the wristband and the interaction element on the USB device need to be engaged in close temporal proximity, e.g. 5 seconds, 10 second, 15 seconds apart. This may allow the acquisition of both wrists of the examinee while pressing the interaction element on the wristband and further assuring the close proximity of the examinee with the USB device.

According to a further embodiment of the present disclosure, the computing environment may be adapted for displaying at least one of examination data and examination answer data, and wherein the computing environment is adapted for marking the displayed data.

The host computing device may comprise a display on which examination data, e.g. the exam questions are displayed to the examinee. Likewise, when answering the examination data, the examinee may have an appropriate form or other means for entering their answers. The answers may be multiple-choice, e.g. may require populating provided answer elements like setting a checkmark in relation to answers assumed correct by the examinee or may be free text, where the examinee may use a keyboard or comparable means to enter answer data. Still further, the examinee may use external devices, e.g. a pen display, a pen tablet or a smart pad, for entering answers by using their handwriting. Exam questions and/or exam answers, displayed on a screen of the host computing device where the examinee is taking the examination, may be marked, e.g. watermarked, in particular in a to the examinee non-visible way, e.g. using steganography. Such marking may include at least one of the following information. The date, the time, the location of the examination/the remote examination room, the examinee associated with a personal surveillance device, examination documents and/or answer documents. Possibly, also at least part of surveillance sensor data may be used when marking the displayed examination content (questions and/or answers). By providing or including such markings, examination fraud may be prevented or at least complicated. E.g., in case the examinee acquires a screenshot or a photo or the like of either the examination question and or the answer information, it may subsequently be determined which examinee, possibly at what time, acquired the images and possibly distributed the examinees taking the examination now or later or distributing globally, e.g. putting on a webpage publicly accessible. Thereby, in case such an examination fraud is detected and linked to a particular examinee, the University may invalidate and examination for said examinee, thereby posing a suitable threat so to discourage an examinee from attempting such an examination distribution.

According to a further embodiment of the present disclosure, the method may further comprise generating by at least one of the first surveillance sensor element and the second surveillance sensor element surveillance sensor data of surveying a physical space and/or a person in a physical space and securely storing the generated surveillance sensor data in the personal surveillance device.

According to a further embodiment of the present disclosure, the method may further comprise generating, by the first personal surveillance device, surveillance status information in particular indicative of a surveillance status of a physical space and/or a person in a physical space.

According to a further embodiment of the present disclosure, the method may further comprise continuously surveying a physical space and or a person in a physical space during a defined surveillance timespan with at least one of the first and second surveillance sensor elements, detecting one of a compliant surveillance status and a non-compliant surveillance status of the physical space and/or the person in the physical space, upon detecting of a surveillance event indicative of a non-compliant surveillance status, surveying the physical space and/or the person in the physical space with the other one of the first and second surveillance sensor element, and in particular switching from a secure mode of interacting with the computing environment to a regular mode of interacting with the computing environment and generating non-compliance surveillance status information comprising at least part of the surveillance sensor data of at least one of the first and second surveillance sensor elements obtained while surveying the person to be surveyed while the secure mode of interacting was active.

According to a further embodiment of the present disclosure, the method may further comprise continuously surveying the person during a defined surveillance timespan with at least one of the first and second surveillance sensor elements, storing the surveillance sensor data of the first and/or second surveillance sensor element temporarily, in particularly storing a loop of the surveillance sensor data of a defined length, detecting one of a compliant surveillance status and a non-compliant surveillance status of the person, upon detection of a surveillance event indicative of a non-compliant surveillance status, retaining the temporarily stored surveillance sensor data in the personal surveillance device and otherwise discarding or overwriting the stored surveillance sensor data after a defined time period, and in particular switching from a secure mode of interacting with the computing environment to a regular mode of interacting with the computing environment and generating non-compliance surveillance status information comprising at least part of the retained surveillance sensor data of at least one of the first and second surveillance sensor elements obtained while surveying the person to be surveyed while the secure mode of interacting was active.

According to a further embodiment of the present disclosure, the personal surveillance device may be a first personal surveillance device and further comprising at least one communication element, the method may further use a second personal surveillance device adapted to be fixable to the person to be surveyed, the second personal surveillance device may comprise at least one communication element and a fixation element for affixing the second personal surveillance device to the person to be surveyed, wherein the second personal surveillance device is adapted to detect a fixation status indicating whether the fixation element is affixed to a person to be surveyed, wherein the first personal surveillance device and the second personal surveillance device may be communicatively connected, the method may further comprise detecting, by the first personal surveillance device and/or the second personal surveillance device, whether the first personal surveillance device and the second personal surveillance device are within a defined distance from each other and communicating a fixation status from the second personal surveillance device to the first personal surveillance device.

According to a further embodiment of the present disclosure, the method may further comprise affixing the second personal surveillance device to a person to be surveyed, determining a surveillance status of the person to be surveyed, and switching from a regular mode of interacting with the computing environment to a secure mode of interacting with the computing environment when the surveillance status information indicates a compliant surveillance status, in particular switching after at least one of the first surveillance sensor element and the second surveillance sensor element has acquired a displayed computer readable symbol on the second surveillance sensor element.

### BRIEF DESCRIPTION OF THE DRAWINGS

The present invention will now be described with reference to the accompanying drawings, in which:
Fig. 1 shows an exemplary implementation of a remote examination according to the present disclosure;
Fig. 2 shows an exemplary functional overview of a first personal surveillance device and a second personal surveillance device according to the present disclosure;
Fig. 3 shows an exemplary high level hardware overview of a first personal surveillance device and a second personal surveillance device according to the present disclosure;
Figs. 4a,b show flowcharts of exemplary sequences when conducting a remote examination according to the present disclosure; and
Figs. 5a,b show exemplary implementations of the computing environment according to the present disclosure; and
Fig. 6 shows an exemplary schematic overview of a remote examination set-up according to the present disclosure.

### DETAILED DESCRIPTION

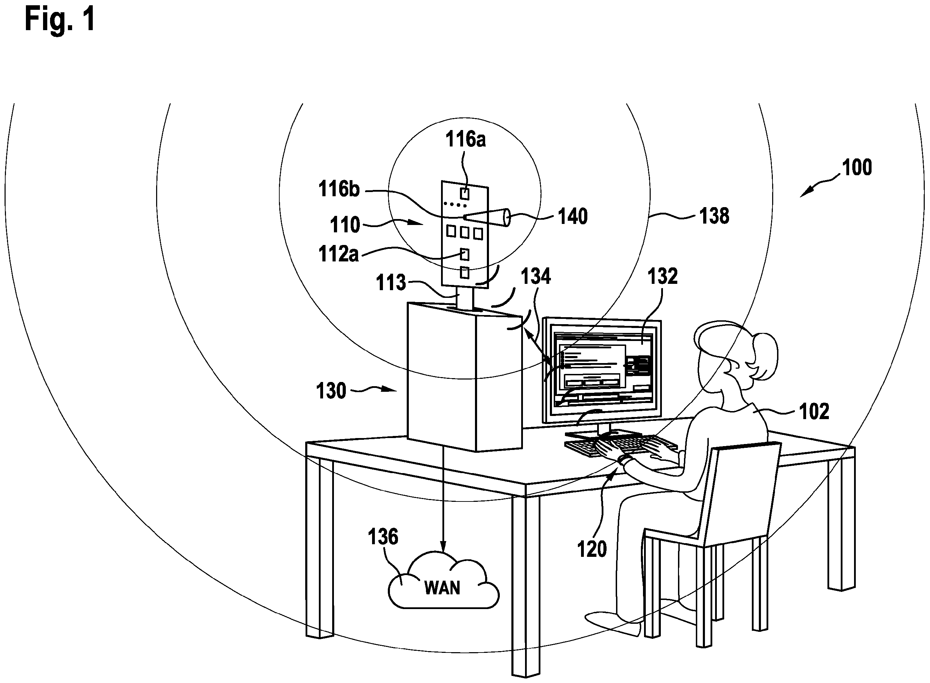

Now referring to Fig. 1, which shows an exemplary implementation of a remote examination according to the present disclosure.

In figure 1, a personal surveillance system 100 is shown where a person to be surveyed/examinee 102 is conducting a remote examination. The situation depicted in figure 1 is a set up in a room remote from the University where the examinee 102 is intending to conduct the examination. The examinee 102 is exemplarily conducting the examination in their own room at home. In order to conduct the examination, the examinee 102 is using the host computing device 130, e.g. their own personal computer. Exemplarily, the host computing device 130 is connected to an external network like the Internet through a wide area network connection 136. The host computing device 130 is arranged on a table in order to allow the examinee 102 to comfortably take the examination.

In order to comply with requirements of the University when conducting the examination, the examinee 102 is using a first personal surveillance device 110 as well as a second personal surveillance device 120, as provided by the University. The first personal surveillance device 110 exemplarily is embodied as a USB device that is connected via a suitable communication and/or energy connection, e.g. a USB connection, with the host computing device 130. In particular, as depicted in figure 1, the first personal surveillance device 110 is directly plugged into a suitable port of the host computing device 130. Also conceivable is to employ an extension cord to allow an easier placement of the first personal surveillance device 110 and in particular to more easily allow the surveying of the examinee 102 and/or the room. Likewise, the first personal surveillance device 110 may have an extension cord integrally connected in a non-removable manner with the first personal surveillance device 110, so to ensure that the first personal surveillance device 110 is not essentially moved from the room by using an excessively long extension cord. The first personal surveillance device 110 may have detection means integrated to determine a length of such an extension cord to detect whether an unauthorised extension cord is used when connecting the first personal surveillance device 110 to the host computing device 130.

Exemplarily in figure 1, the first personal surveillance device 110 is connected with a port at the top of the host computing device 130 to have a substantially unobstructed view of the room the examination will be taken in. To survey the room, the first personal surveillance device 110 comprises a first surveillance sensor element 116a and a second personal surveillance sensor element 116b. The first surveillance sensor element 116a exemplarily is a radar sensor element while the second personal surveillance sensor element 116b is exemplarily a camera sensor element. Both the first surveillance sensor element 116a and the second personal surveillance sensor element 116b is arranged to be able to substantially completely survey the room the examinee 102 is intending to take the examination in.

For surveying the room, the first surveillance sensor element 116a employs electromagnetic radiation 138 (radar wave length) to scan the room in order to obtain radar image information. Further, the second surveillance sensor element 116b uses electromagnetic radiation 140 (visible light wave length) to scan the room in order to obtain optical image information. The acquired image information may be processed by the first personal surveillance device 110 in order to determine whether the examinee 102 adhered to the cleanroom protocol and is not attempting examination fraud, or may be transmitted, e.g. via network connection 136 to the University for assessment and analysis.

The second personal surveillance device 120 is attached to the examinee 102, which is depicted in figure 1 only schematically. Exemplarily in figure 1, the second personal surveillance device 120 is e.g. a wristband and is attached to the right wrist of the examinee 102. The first personal surveillance device 110 comprises a least one communication element 112a, while the second personal surveillance device comprises a communication element 122 (not depicted due to size). The first personal surveillance device 110 and the second personal surveillance device 120, using communication elements 112a and 122, are in communicative connection using a communication connection 134, which is exemplarily embodied as a bidirectional communication connection in figure 1. By the communication connection 134, data from the second personal surveillance device 120 may be sent to the first personal surveillance device 110, e.g. informing the first personal surveillance device 110 whether the second personal surveillance device 120 is securely affixed to the examinee 102, in other words whether the wristband 120 is closed around the wrist of the examinee.

The host computing device 130 is executing a computing environment 132, exemplarily depicted as a window for taking the examination on the monitor of the host computing device 130. Here, the examinee 102 may interact with the host computing device 130 in the usual way, e.g. using keyboard and mouse, to take the examination, when asked to provide answers to the questions presented to the examinee 102 via the monitor of a host computing device 130 executing the computing environment 132. In other words, as long as the wristband 120 is securely affixed to the examinee 102 and the USB device 110 determines adherence to the cleanroom protocol by surveillance data gathered from at least one of the surveillance sensor elements 116a,b, the computing environment 132 is providing, in a secure mode of interacting, the functionality of answering the questions of the examination documents to the examinee 102.

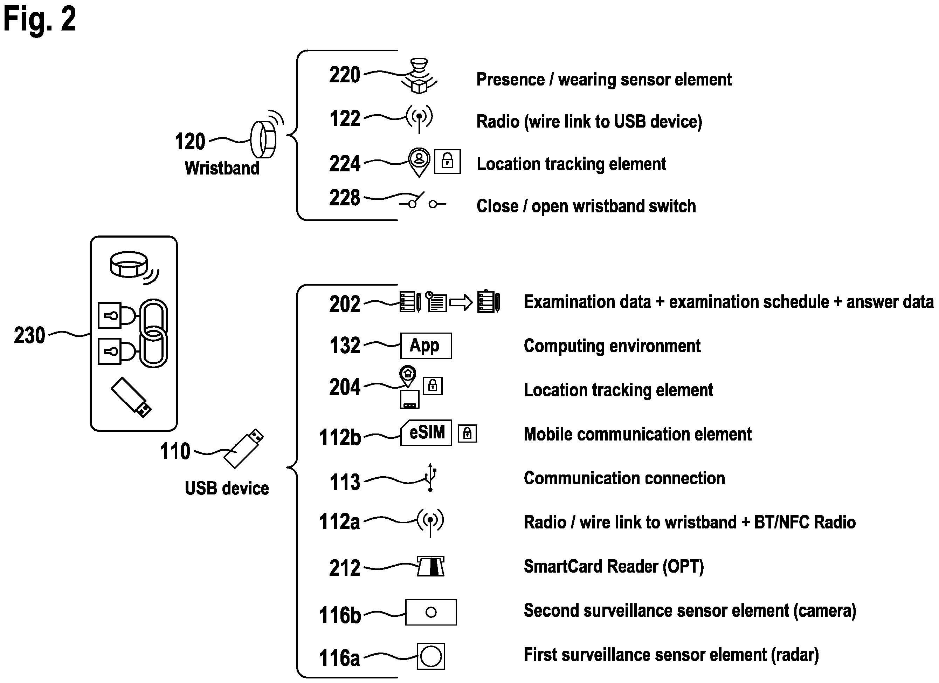

Now referring to Fig. 2 shows an exemplary functional overview of a first personal surveillance device and a second personal surveillance device according to the present disclosure. In particular, figure 2 depicts the individual elements of exemplary embodiments of the first personal surveillance device 110 and the second personal surveillance device 120.

The exemplary embodiment of the first personal surveillance device 110 of figure 2 comprises a memory element 202, which may contain examination data for one or a plurality of examinations, as well as an examinations schedule. The examination schedule may comprise information about a defined time and date when an examination is supposed to be taken as well as a duration of the examination. This information may be defined by the University and stored in the memory element 202. After the examination was taken, memory element 202 may also store the answer data of the examinee 102. The memory element 202 may in particular be a secure memory element, in that the content is protected so that it cannot be freely accessed and/or changed. Additionally or alternatively, the data stored in the memory element 202 may be cryptographically signed and/or encrypted. Memory element 202 may further comprise computing environment 132, e.g. an application, to be executed on the host computing device 130. The first personal surveillance device 110 further comprises a location tracking element 204, e.g. a GPS tracking element, in order to determine an absolute location of the first personal surveillance device 110, and to detect any movement of the first personal surveillance device 110 after e.g. starting with the examination. Exemplarily shown in figure 2 is a mobile communication element 112b, e.g. using an eSIM card for accessing a cellular network. The described functionality of the first personal surveillance device may likewise be implemented without providing the communication element 112b. In particular, it may suffice to have a communication connection to the Internet/with the University via the network connection 136 of the host computing device 130.

The first personal surveillance device 110 comprises a communication connection 113, with which the first personal surveillance device is connectable to the host computing device 130. The communication connection may be any connection that provides power to the first personal surveillance device 110 and allows interaction, in particular logic interaction with the elements of the first personal surveillance device 110 and/or the data stored in the memory element 202 like examination data, examination schedule data and answer data as well as the computing environment 132.

Further, a communication element 112a is provided, for communication with the second personal surveillance device 120 and/or a further image acquisition device, e.g. a smart phone of the examinee 102 or an ID card. The communication element 112a may in particular be a Bluetooth or near field communication connection. Alternatively, the communication element 112a may embody a wire link/wired connection to the second personal surveillance device 120. Still further a smartcard reader 212 is depicted, e.g. for reading a student ID card or an official government issued ID card. However, the smartcard reader 212 is optional. Still further, the first personal surveillance device 110 comprises a first surveillance sensor element 116a and a second surveillance sensor element 116b.

Now coming to the second personal surveillance device 110 or the wristband 110, comprising a presence or wearing sensor element 220, with which the second personal surveillance device 120 may determine that it is worn by the examinee 102 and/or is in a locked condition affixed to the examinee 102. The presence/wearing sensor element 220 may further determine a biological property of the examinee 102, thereby establishing that the first personal surveillance device 120 indeed is worn by a living human being.

The second personal surveillance device 120 further comprises communication element 122 which may be a communication element corresponding to the communication element 112a of the first personal surveillance device 110 so that a communicative connection 134 between the first personal surveillance device 110 and the second personal surveillance device 120 can be established. As such, the communication element 122 may be a wireless or wired communication element, in particular a Bluetooth or near field communication element.

Further, the second personal surveillance device 120 comprises a location tracking element 224, which is optional. Still further, an interaction element 228 is provided, e.g. a switch indicating to the second personal surveillance device 120 to close and/or open the locking element for affixing the wristband 120 to the examinee 102, and/or may indicate to the first personal surveillance device 110 and/or the computing environment 132 the intention of the examinee 102 to start and/or terminate the examination.

The first personal surveillance device 110 and the second personal surveillance device 120 are connected by a secure link 230, which may in particular be a cryptographically secured link by communication between the communication elements 112a and 122. In particular, the first personal surveillance device 110 and the second personal surveillance device 120 may have been pre-personalised and pre-linked by the University to one another and to a certain examinee.

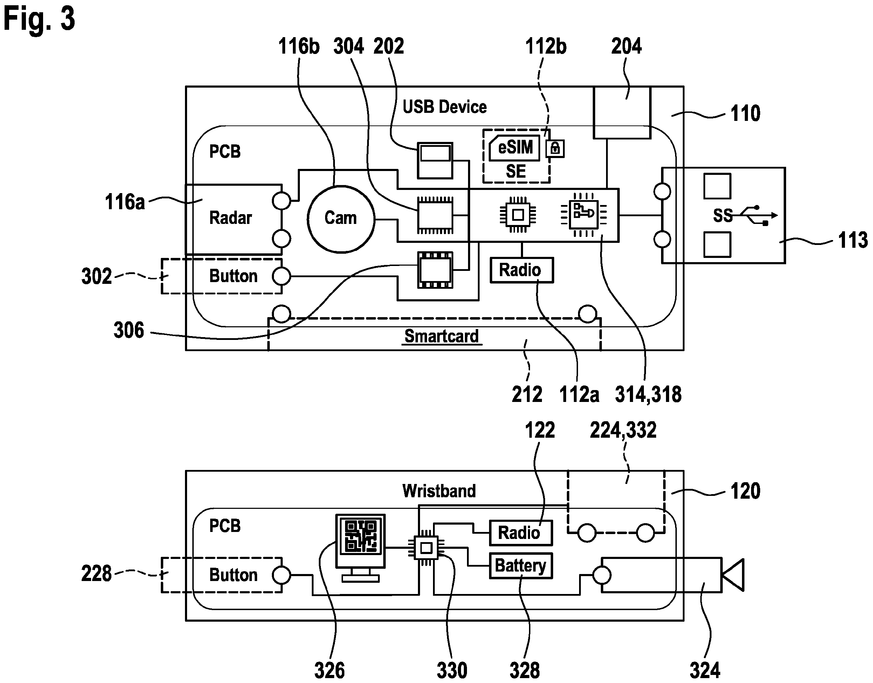

Now referring to Fig. 3 shows an exemplary high level hardware overview of a first personal surveillance device and a second personal surveillance device according to the present disclosure.

The first personal surveillance device 110 is exemplarily depicted as a USB device. USB device 110 comprises on a printed circuit board the individual elements as described in relation to figure 2. The USB device comprises a communication connection 113, e.g. a USB connection, with which element the USB device may be connected to the host computing device 130. The USB device further comprises a processing element 314 which exemplarily is depicted as comprising a system on chip (SoC) as well as a field-programmable gate array (FPGA) logic. The SoC may run an operating system, e.g. an embedded Linux and may comprise a Chain of Trust (CoT) capable multistage boot loader. Further, the SoC may comprise a secure cryptographic engine and may comprise a microarchitecture that is adapted for machine learning or artificial intelligence applications (e.g. ARM M55, A53 + NEON SIMD, RISC-V Andes NX27V w/ RVV). The FPGA may be employed for additional cryptographic functionality and/or for hardware fault correction. The processing element 314 may further comprise, not depicted separately, a time element 318, in particular a secure real-time clock capable of determining absolute time and/or date, in order to be able to schedule the correct start and end time of an examination, in accordance with the examination schedule that is provided by the University. It may be understood that elements of the processing element and the time element may be combined and/or certain elements or omitted.

The USB device 110 further comprises communication element 112b, exemplarily depicted as an eSIM, possibly further comprising a secure enclave module to securing, in particular in a cryptographic manner, a cellular communication connection, like 3G, LTE or 5G. Further depicted is memory element 202, which can in particular be a secure element, cryptographically enforced by cryptographic functionality provided with processing element 314, in particular the SoC and/or the FPGA. Further, USB device 110 comprises a random access memory element 304 and potentially a flash memory element 306. Further to the optional communication element 112b, communication element 112a for connection with the wristband 120 is provided as a wireless communication element 112 to establish a wireless communication connection, e.g. via Bluetooth or another suitable near field or close proximity communication method. Further depicted are the first surveillance sensor element 116a, exemplarily a radar sensor element, and the second surveillance sensor element 116b, exemplarily an optical sensor element, e.g. a camera sensor element. The radar sensor element may in particular be a sensor element for transmitting electromagnetic radiation and receiving back electromagnetic radiation. Radar signals may in particular be employed for seeing through objects, but also measuring the heartbeat and/or respiration of person, thereby identifying the number of persons present in a given location like the remote examination room. Analysis of the acquired surveillance sensor data may be performed by the processing element 314. Such surveillance sensor data may be capable to distinguish accurately a plurality of objects and may scan in particular with 100 frames per second or more. Particularly beneficial may be a radar sensor element to survey the complete remote examination, since a radar sensor is capable of surveying a comparably large volume of space. Alternatively, a plurality of radar sensors may be employed, in case a single sensor is not arranged to acquire a sufficiently large volume of space to ensure adequate surveillance stop e.g., to all for radar sensor elements may be employed, arranged appropriately to survey the examination, in particular without substantial gaps. Finally, since radar data as the surveillance sensor data may not be immediately employed, in other words may need machine analysis, such surveillance sensor data may particularly preserve the privacy of the examinee.

Still further, an optional smartcard reader 212 and an optional interaction element 302, e.g. a button, are provided. In particular, the USB device may be unlocked by inserting or presenting a suitable ID card to the USB device, e.g. via the smartcard reader212. The interaction element 302 may allow the examinee 102 to interact with the computing environment 132, in particular initiate a particular functionality in the computing environment, e.g. start of a registration process with the University and/or a registration between the USB device and the wristband. Finally, the USB device may comprise a location tracking element 204, e.g. an absolute location determining element using Galileo, GLONASS, GPS or a similar system or comparable indoor tracking system.

Further depicted in figure 3 is an embodiment of a second personal surveillance device 120, here exemplarily embodied as a wristband. Also the wristband may comprise a processing element 330 to control and interact with the individual elements of the wristband. The wristband comprises a communication element 122, for connection with the USB device. Further, the wristband is provided with a battery 328 to allow independent operation of the wristband without the need for a wired power connection. The wristband may further comprise an optional display element 326, e.g. for displaying a computer readable symbol to a surveillance sensor element of the USB device. The wristband is provided with a fixation element 324, in figure 3 only schematically depicted, for securely affixing the wristband to the examinee 102. Here, the wristband may be substantially flexible or may have a preformed wrist like or circular shape, to wrap around the wrist of the examinee 102. When being closed, the wristband is completely looping around the wrist of the examinee 102 and preferably is dimensioned such that a removal of the wristband from the wrist without opening the wristband is not possible, at least not without injuring the examinee 102 or without damaging the wristband.

Optionally, the wristband may comprise a location tracking element 224 and/or a motion sensing element 332. The location tracking element 224 and the motion sensing element 332 may be combined in a single element. While the location tracking element 224 in particular determines in absolute global position, like location tracking element 204, the motion sensing element 332 may in fact be employed to determine a relative local movement of the examinee 102. E.g. by using the motion sensing element 332, in the case that the room where the examination is taken cannot establish a valid global positioning signal, the motion sensing element 332 may be sufficient to determine a movement of the examinee 102 and whether the extent of the movement of the examinee 102 is such that the behaviour of the examinee still complies with the cleanroom protocol. For example, the motion sensing element 332 may determine a relative movements of under 1 m, thereby determining that the examinee 102 is substantially moving only at the table where the examination is taken. In case the motion sensor 332 determines a relative movement of more than 5 m, it may be assumed that the examinee 102 has left the room or at least the vicinity of the USB device, in particular has left the surveillance radius of the USB device and thereby possibly attempts examination fraud. Upon detection of such a movement, which may be determined by the motion sensing element 332 but likewise also with the location tracking element 224, a secure mode of interacting with the computing environment may be (at least temporarily) disabled and/or the second surveillance sensor element 116b, e.g. the camera, may acquire images to secure proof for the University whether an act of examination fraud has indeed been attempted by the examinee 102. The acquired surveillance sensor data in this example may be sent to the University substantially immediately by an online communication connection and/or may be stored in the memory element 202 for analysis by the University. Depending on an examination protocol of the University, the examinee may be allowed to continue with the examination regardless and only the subsequent analysis of the acquired surveillance data by the University may lead to a failing of the examination, in the case that an act of examination fraud was established.

The wristband further comprises an interaction element 228, e.g. for locking and unlocking the wristband, and/or to indicate to the USB device and/or the computing environment 132 that the examinee now wears the wristband, and that the examination may start or should be terminated.

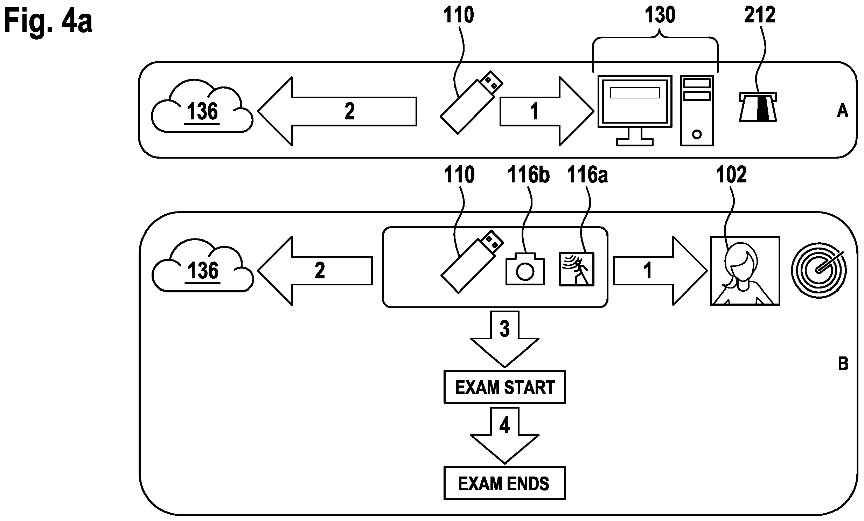

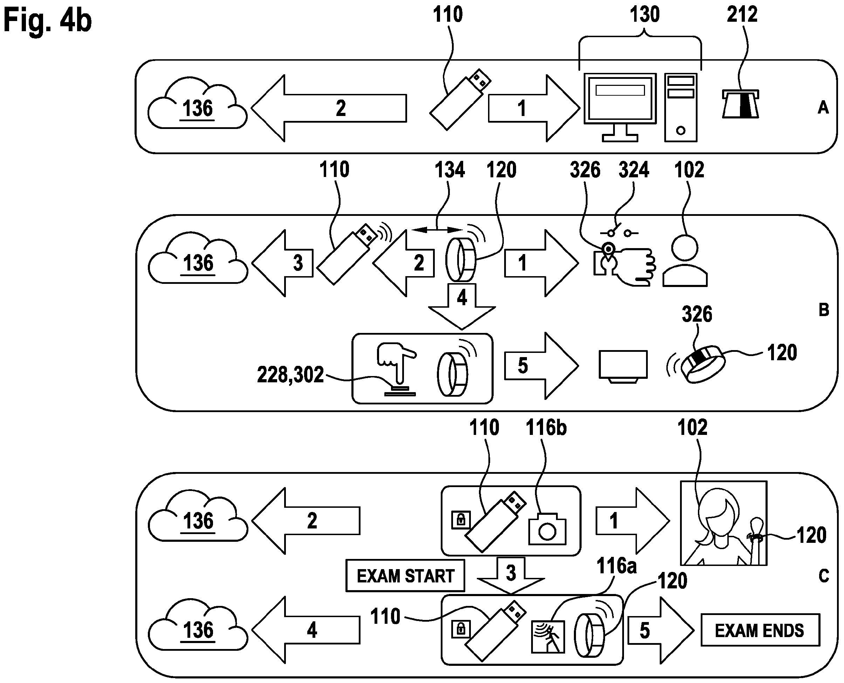

Now referring to Figs. 4a,b show flowcharts of exemplary sequences when conducting a remote examination according to the present disclosure.

Figure 4a shows a remote examination scenario without using a wristband. Now referring to section A of figure 4a. When the examinee 102 is about to conduct an examination, the first personal surveillance device 110, e.g. the USB stick, is inserted (step 1) into the host computing device 130. Upon insertion of the USB device, the computing environment 132 is executed on the host computing device 130. The examinee 102 may now identify themselves by using appropriate logon credentials or by using a suitable ID card with the smartcard reader 212. The logon may be verified versus information stored on the USB device, e.g. information provision by the University or the USB device may establish a communication connection (step 2) to the University for authenticating the credentials and thus the identity of the examinee 102. In the case of an established communication connection with the University, the examination data stored on the USB device may be verified whether it is up-to-date and has not been tampered with, e.g. by comparing a cryptographic signature. In the case that it has been determined that the examination data is up-to-date, and has not been tampered with, the remote examination may proceed. In the case that it is determined that the examination data has been tampered with, either the examination may be terminated and the examination may be failed or the University may provide further examination data replacing the current examination data and the remote examination may proceed. Still further, examination data may only now be provided from the University to the USB device.

Now referring to section B of figure 4a. Once the examinee 102 has been authenticated, at least one surveillance sensor element may be activated (step 1), e.g. a radar sensor element 116a and a camera sensor element 116b. E.g. the radar sensor element 116a may acquire surveillance imaging data of the remote examination room, potentially establishing a 3D model of the remote examination room. The camera sensor element 116b may now require a photograph of the examinee 102 in the remote examination room to further ascertain the identity of the examinee 102 and to acquire surveillance image information of the remote examination room to allow determining whether the remote examination room complies with the cleanroom protocol. The acquired image information may then be stored in the USB device and/or may be sent to the University substantially immediately and possibly continuously throughout the examination.

After the identification of the examinee 102, the radar sensor element 116a may continue to acquire surveillance image information that allows the subsequent determination of whether the examinee is e.g. moving excessively, leaving the remote examination room or possibly another person is entering the remote examination room. All this may be an indication of an attempt of examination fraud by not adhering to the cleanroom protocol. A further motion sensor element arranged at the USB device, not depicted in figure 4A, may be provided, e.g. an accelerometer may be embedded in the USB device to ensure that the USB device is not moved after the initial calibration and referencing to the remote examination room. Analysis of the surveillance sensor data, in particular the radar sensor data may be performed locally by the processing element 314 of the USB device, in particular by a trained artificial intelligence model or by a machine learning algorithm. Alternatively or additionally, surveillance sensor data may be transmitted (step 2) to the University and may be analysed by a University server.

After authentication and identification of the examinee 102 and registration of the remote examination, thereby establishing the adherence to the cleanroom protocol, the examination may start (step 3). The host computing environment 132 is executed on the host computing device 130, thereby providing access to the examination data for the examinee. The examinee may now start with taking the examination. Upon the start of the examination, the computing environment may switch from a normal mode of interacting to a secure mode of interacting, thereby providing access to the examination data for the examinee. By the continued surveillance by at least the first surveillance sensor element 116a, e.g. the radar sensor element, it may be detectable that the user is moving excessively in the room, possibly leaves the room or otherwise another person joins the room, all of which may be an indication of an attempt of examination fraud. In the case that an attempt of examination fraud is assumed, the second surveillance sensor element 116b may acquire further surveillance sensor data, e.g. further images of the remote examination room for confirming or disproving that an attempt of examination fraud took place. At the end of the examination (step 4), either when the allotted examination time has expired or the examinee has indicated that they are finished with the examination, the examination may be terminated, the computing environment may switch back from the secure mode of interacting to the normal mode of interacting, thereby securely storing, signing and/or encrypting the answer data for storing on the USB device and/or sending to the University via network connection 136.

Now referring to figure 4b. Section A of figure 4b substantially corresponds to section A of figure 4a. Sections B and C differ in that a second personal surveillance device 120, a wristband, is used in addition to the USB device. In step 1 of section B, the examinee 102 puts on the wristband and closes the fixation element 324. This in turn activates a pairing between the USB device 110 and the wristband 120 via communication connection 134 (step 2). The wristband may now be validated versus the University server via network connection 136 (step 3). Display element 326 or an LED may indicate the validity of the established link. In step 4, the user confirms wearing the bracelet and the intention to continue with the examination, e.g. by pressing one of the interaction elements 228, 302. Subsequently, a computer readable symbol may be generated by at least one of the USB device 110 and the wristband 120. Potentially, the computer readable symbol may be generated by both the USB device 110 and the wristband 120, to enable an easy comparison. The computer readable symbol may likewise be sent to a server for storage, e.g. the University via communication connection 136.

The wristband may now display the computer readable symbol on the display element 326 (step 5). The computer readable symbol, e.g. a QR code may be unique, and may be generated only for a single usage. E.g. opening the wristband invalidates the computer readable symbol and/or simply removes the computer readable symbol from the display element 326. However, an invalidation of the computer readable symbol in both the wristband 120 and the USB device 110 may be preferred, so to avoid that a picture of the computer readable symbol is taken and shown to the USB device after opening the wristband. Such an examination fraud however may be prohibited by the USB device verifying a closed status of the wristband when reading the computer readable symbol. To further verify that the wristband has not been closed again after having been opened, a communication connection between the wristband and the USB device may be required when the USB device is acquiring the computer readable symbol. Preferably, the wristband 120 may only be active and/or powered up, e.g. by battery 328, and thereby capable of communicating with the USB device 110 in a closed state of the wristband 120, in particular when affixed to the examinee 102.

Still further, the computer readable symbol stored in the USB device may be invalidated once the USB device is removed/disconnected from the host computing device. Still alternatively, the computer readable symbol may be generated by the USB device and sent to the wristband via the communication connection 134. In any case, the generation of the computer readable symbol may employ secrets of the USB device and/or wristband, shared secrets between wristband and USB device, unique data typical to the current computer session, e.g. dependent on the current lock in session, secrets linked to the identity and authenticity of the examinee or be linked to the examination data and/or the examination schedule. Such a computer readable symbol may also be unique with respect to time, space (location), content of the examination (examination data), the examinee and an individual counter, e.g. related to a current number of open/closings of the wristband, the number of activations of the USB device and the like.

Now continue with section C, step 1, the examinee 102 is presenting the wristband 120 and in particular the computer readable symbol displayed on the display 326 of the wristband 120 to the second surveillance sensor element 116b, e.g. the camera of the USB device, in order to enable the USB device 110 to acquire the computer readable symbol on the display 326. The USB device may not only acquire the symbol on the display of the wristband, but may acquire a photo of the examinee 112 for identification and verification purposes. Such image information allows to ensure that the right examinee is wearing the wristband by acquiring the image of the examinee wearing the wristband in a closed state while the computer readable symbol is displayed on the display 326. In particular, the acquired image may be required to clearly show that the wristband is indeed attached to the arm of the examinee, e.g. by requiring or enforcing a specific posture when showing the computer readable symbol, so to ensure that no one else is wearing the wristband but hiding in the image. In step 2, the acquired image information may be forwarded to the University and potentially may be verified by the University substantially online. Once the identity of the examinee and the computer readable symbol on the wristband have been verified by the University the examination may start. This verification may be performed substantially online by either an examiner of the University, having access to the relevant data to verify the identity and the computer readable symbol or may be automatically verified, e.g. by an artificial intelligence or machine learning algorithm. Further alternatively, the image information may only be stored for a subsequent verification, e.g. only in the case that an examination fraud is assumed. Still further, alternatively or additionally, the image information may be stored in the memory element 202 of the USB device 110.

Continuing with step 3, the examination is about to start. Here, the first surveillance sensor element 116a, the radar sensor element, may be activated and may now provide a substantially continuous surveillance of the remote examination room. Adherence to the cleanroom protocol may be determined by analysis of the surveillance sensor data acquired by the radar sensor element. Once it is determined that all requirements for taking the examination as specified by the University have been met, the computing environment 132 may switch from the normal mode of interacting to the secure mode of interacting, may access the examination documents and subsequently may present the examination data/questionnaire to the examinee for answering. Again, with the surveillance sensor data, it may continuously be verified that the examinee is adhering to the cleanroom protocol, e.g. is not trying to use unauthorised material like e.g. a textbook, does not leave the remote examination room and does not receive support from another person e.g. entering the remote examination room or approaching the vicinity of the examinee. Likewise, in the secure mode of interacting any access to the Internet or any other application of the host computing device 130 may be prohibited. In step 4, during the examination, the examinee 102 is constantly monitored by the radar sensor element 116a. The surveillance sensor data may be transmitted via network connection 136 to a remote server, e.g. of the University for storage and possible subsequent analysis in the case that an examination fraud is assumed. The movement of the examinee may not only be monitored by the first surveillance sensor element 116a, but likewise with a dedicated sensor element in the wristband, e.g. a motion sensor element or an accelerometer. The examination is terminated either by expiry of the given examination time specified by the University or in case the examinee opens the wristband, thereby removing the wristband from their body. Thus, at the end of the examination (step 5), the computing environment may switch back from the secure mode of interacting to the normal mode of interacting, thereby securely storing, signing and/or encrypting the answer data for storing on the USB device and/or sending to the University via network connection 136. Alternatively, the radar sensor element may have been activated earlier than depicted in figure 4b, e.g. upon insertion of the USB device 110 in the host computing device 130, or when execution of the computing environment 132 commences.

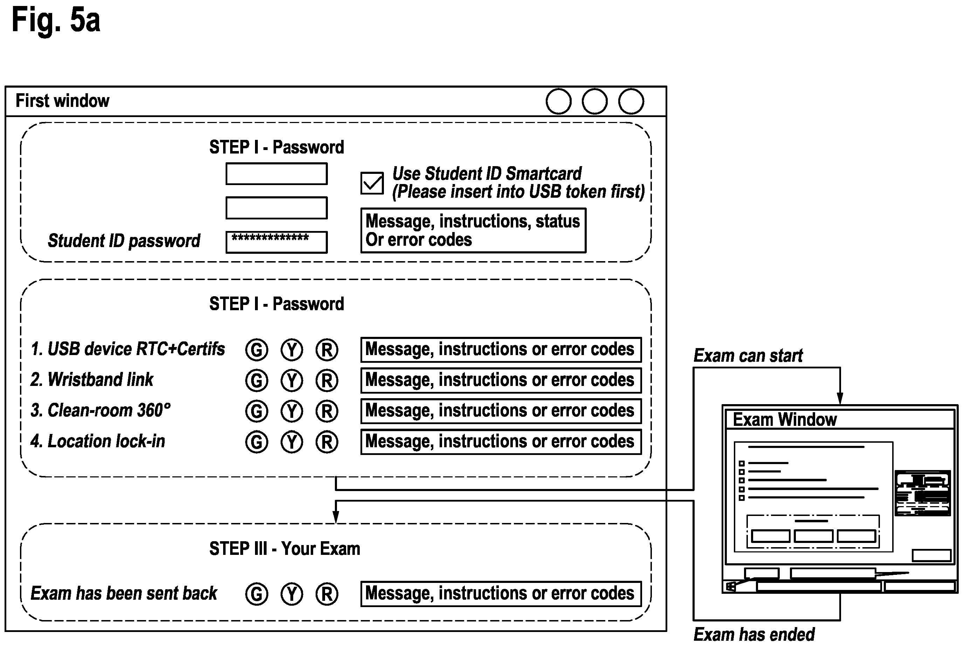

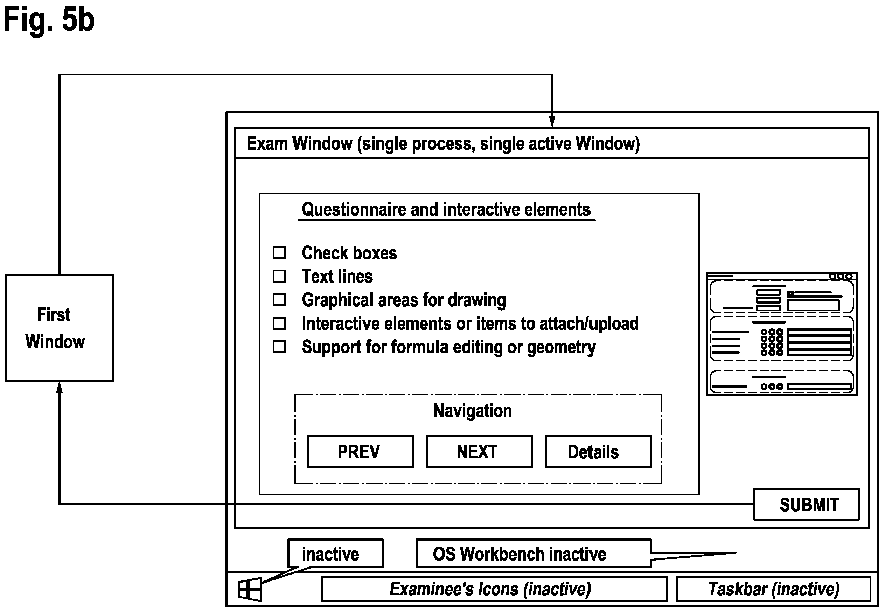

Now referring to Figs. 5a,b show exemplary implementations of the computing environment according to the present disclosure.

Figures 5 a and b show an exemplary user interface for conducting the examination.

Here, exemplary two different windows are used, a first window for preparing the examination, depicted in figure 5 a, and an examination window for conducting the examination, depicted in figure 5b.

The first window's lifecycle may extend over the full exam period and provides the examinee with information during different exam periods. The first window may in particular relate to the normal mode of interacting with the computing environment while the examination window may relate to the secure mode of interacting. Both windows essentially correlate with the computing environment executed on the host computing device. E.g., the examinee is connecting the USB device with the host computing device, thereby executing the computing environment. The computing environment then presents the first window to the examinee.

Now, in step I, the examinee may log on by entering suitable identification credentials like username and password and/or by using suitable ID card.

In step II, the activation and locking of the communication between the USB device and the wristband, ascertaining adherence to the cleanroom protocol and the determination of a location for a location lock in are performed. At substep 1, USB device insertion into examinee's host computing device, the USB device may first connect to the University to ensure time is correct and sync if needed the local RTC first and then ensure locally stored certificates are valid and approved and error free. If this step succeeds, the green light for this substep 1 goes on and examinee can proceed to substep 2.

When the examinee wears the wristband on their arm and closes it, this may activate a secure pairing between the wristband and the USB device, e.g. based on pre-programmed and unique to the wristband/USB device pair secrets, so that no other wristband or USB device may be connected to and used. Once the secure link up between the wristband and the USB device is established, the USB device may become the master of the wristband. If the pairing succeeds with no error, the green light for this substep 2 goes on and examinee can proceed to substep 3.

Next, the examinee acquires volumetric image information of the remote examination room, e.g. a 360° image, either with a surveillance sensor element of the USB device or with a further image acquisition device, e.g. a smart phone of the examinee, possibly using a dedicated application provided by the University. The volumetric image information may be analysed locally or remotely and/or may be stored for later analysis. When the volumetric image information is determined to be sufficient, the green light for substep 3 goes on and examinee can proceed to substep 4.

In substep 4, the examinee is required to register their location where the examination is taking place to allow establishing an associated geofence lock to provide the necessary assurance to the University that they are remaining in their location of choice for the duration of the exam.

The examinee may press a button on the wristband (or alternately a button on the USB device) to indicate to both the USB device and the wristband that they may now acquire their respective locations. Both locations are supposed to be close together, since it is assumed that the examinee wearing the wristband is sitting close to the host computing device used for the examination. Some margin may exist so that not as soon as the examinee moves only a short distance an alarm is triggered and invalidates the examination due to an assumed lack of adherence to the cleanroom protocol. Once substep four is performed and green, the examinee may commence with the examination and the exam window may be opened.

Success of each substep is indicated exemplarily by three visual indicators each, with green for success, red for failure and yellow as an alert. Alternative to the above described process, all substeps are evaluated substantially simultaneously and a result is determined substantially simultaneously. A single red may prevent starting the examination, while a yellow status may not prevent starting the examination but may trigger a subsequent analysis of the acquired surveillance sensor data by the University. Preferably all indicators are green, allowing the computing environment to start the examination and switching to the secure mode of interacting.

The exam window may be locking in the examinee on his own client machine by prohibiting switching of applications, i.e. switching to an application other than the computing environment for taking the examination, or unauthorised access to other programs, e.g. a web browser for searching the Internet.

In particular, the exam window may be a single process GUI with an embedded questionnaire in it. The exam window may take full control over the examinee's host computing device OS workbench surface, independently of used screen resolution or multi-screen configuration. The single process GUI and its embedded questionnaire may run as an application executed from the USB device.

In order to prevent tampering with the examination, GUI and interactive buttons in GUI may be effectively running on examinee's client machine while content displayed in the GUI interactive fields and elements may be rendered directly into the GUI by the USB device, e.g. using standard WEB page techniques. Thereby, data displayed in GUI is separated from the GUI. This may require that the USB device renders actively and in real time information into the GUI, e.g. the questionnaire. Answers however may be captured with "forms" in the GUI and stored in the USB device, in the memory element 202. The USB device may then combine the answers with the questionnaire.

The exam window may provide a very restricted number of buttons to navigate through each question back and forth, e.g. using "PREV" and "NEXT" buttons. An optional "Details" button may provide additional information to the examinee for specific questions.

The exam window may exhibit a "SUBMIT" button that, when pressed by the examinee, will immediately terminate the examination and close the exam window and questionnaire - an intermediate pop-up asking the examinee if they really want to finish the exam where there still remains time to re-read answers may be appropriate to avoid error prone manipulation of the GUI. Therefore, either clicking on "SUBMIT" button or simply opening the wristband will have the effect of ending the examination, securing the answer data and the examination data and reverting to the first window and leaving the secure mode of interacting.

In case of a power loss in case the USB device is removed, it may be conceivable that the given answers are saved as far as the examinee has provided exam answers. In other words, the answers may be saved to the USB device and/or transmitted to the university incrementally, preferably directly after a certain answer was given, or after a certain examination block is completed. A later amendment of answers previously given may or may not remain possible. Also, in case there is power loss, an examinee may not be able to restart or continue with the examination once power is reinstated, but at least a log of what happened is retained so that possibly answers given thus far were securely stored and may be taken into consideration when grading the examination. Alternatively, the examinee may continue with the examination from where they left for the remainder of the examination time after restarting the examination procedure. Optionally, the USB device 110 may comprise a battery, to keep the USB device powered even when disconnected from the host computing device 130, in order to enable a quicker resuming of the examination while at the same time allowing to continue with the acquisition of surveillance sensor data, for a subsequent analysis regarding examination fraud. Now, STEP III of first window becomes active, once the examination is terminated. STEP III informs the examinee that the answers are now packed, secured (signed and/or encrypted) and sent back to the University. Alternatively or additionally, the answers may be securely stored in the USB device and the examinee may bring the USB device back to the University either in person or via post.

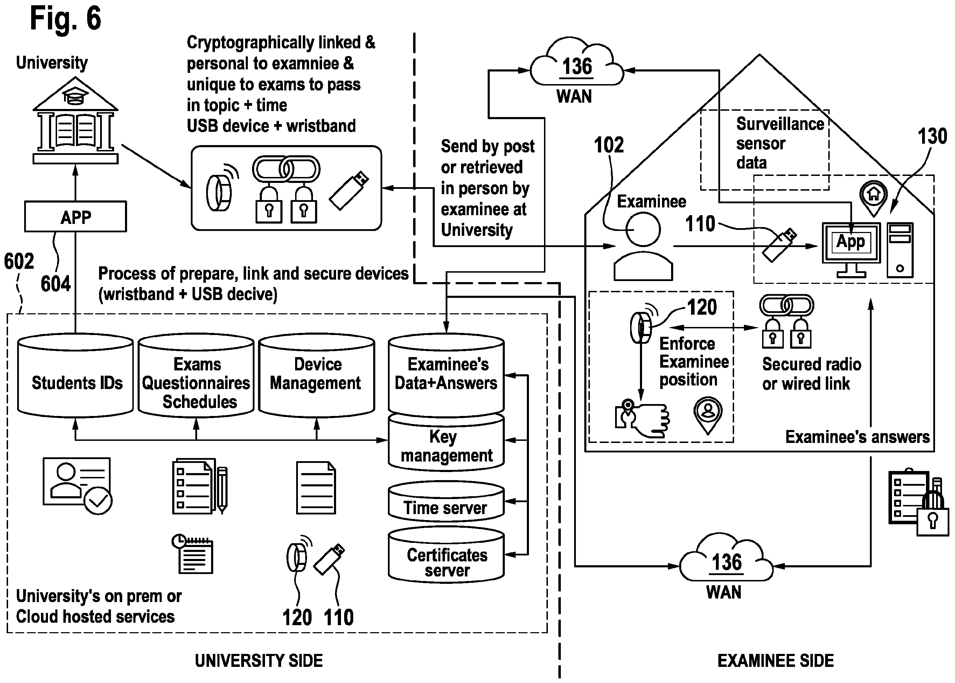

Now referring to Fig. 6 shows an exemplary schematic overview of a remote examination set-up according to the present disclosure.

On the left side of figure 6, the University is represented with its various infrastructures, while on the right side is represented the examinee's remote examination location, generally their own home, or any other suitable place.

The wristband + USB device are handed out by the university to the examinee (from left to right). Both the wristband and the USB device are cryptographically uniquely linked for a specific, unique examinee, for at least one examination taking place at a defined date and time, which the examinee is supposed to pass.

When the defined examination time arrives, the examination is conducted as described above.

Once date and time of the exam has passed, all examinee and examination specific information stored on the USB device become ephemeral and may be erased by the university (potentially after a certain amount of time in case of e.g. dispute). Essentially, the answers to the exam's questionnaire and the devices are subsequently returned to the University, either digitally or physically.

The University has a student management system 602 in place, either remotely hosted or on the University premises. The student management system 602 shall not be explained in further detail.

The University uses a university application 604 allowing the University to manage student ID's, exam questionnaires and related schedules and also the wristband and the USB device to enable secure remote exam passing.

The various cylinders of the student management system 602 depicted (e.g. "Student's ID", "Exams Questionnaires Schedules") exemplarily indicate that the respective information is managed separately, e.g. in different e.g. databases and are not merged into a single data set, e.g. for security and reliability purposes. In consequence, the University application 604 allows the University to encode, encrypt and secure all relevant data from the various cylinders into both the wristband and the associated USB device.

Effectively, as described before, the remote examination may be split in four general sections.

First, the University prepares, provisions, personalises and uniquely links the wristband and the USB device for a defined examinee

Subsequently, the wristband and the USB device are provided to the examinee.

The examinee then uses the devices provided by the University for the duration of the remote examination phase, e.g. for a single examinee, weeks, months or a full semester. In the case that an over the air provisioning of at least the USB device is implemented such that updated examination data is stored on the USB device once the examinee is authorised to take a certain examination or in case the examination data generally may be retrieved from the University at the time of the examination over the air, the USB device and the wristband substantially may remain with the examinee throughout his attendance of the University.

At some point the examinee returns the devices to the University once all the intended examinations have been taken.

It is to be understood that the invention is not limited to the embodiments described above, and various modifications and improvements may be made without deviating from the concepts described here. Any of the features described above and below may be used separately or in combination with any other features described herein, provided they are not mutually exclusive, and the disclosure extends to and includes all combinations and sub-combinations of one or more features described herein.

Finally, it should be noted that the term "*comprising*" not exclude other elements or steps, and that "*a*" or "*one*" does not exclude the plural. Elements that are described in relation to different types of embodiments can be combined. Reference signs in the claims shall not be construed as limiting the scope of a claim.

### LIST OF REFERENCE NUMERALS

- 100: personal surveillance system
- 102: person to be surveyed/examinee
- 110: first personal surveillance device/USB device
- 112a,b: communication element
- 113: communication connection
- 116a,b: first, second surveillance sensor element
- 120: second personal surveillance device/wristband
- 122: communication element
- 130: host computing device
- 132: computing environment
- 134: communication connection
- 136: network connection/WAN connection
- 138: electromagnetic radiation (radar wave length)
- 140: electromagnetic radiation (visible light wave length)

- 202: memory element
- 204: location tracking element
- 212: smartcard reader
- 220: presence/wearing sensor element
- 224: location tracking element
- 228: interaction element
- 230: secure link

- 302: interaction element
- 304: random access memory element
- 306: flash memory element
- 314: processing element
- 318: time element
- 324: fixation element
- 326: display element
- 328: battery element
- 330: processing element
- 332: motion sensing element

- 602: student management system
- 604: university application

## Claims

1. A personal surveillance device (110), comprising
a first surveillance sensor element (116a);
a second surveillance sensor element (116b); and
a processing element (314);
wherein the first surveillance sensor element and the second surveillance sensor element are sensor elements each comprising a different sensor type;
wherein the personal surveillance device is adapted to be connectable to a host computing device (130); and
wherein the personal surveillance device is adapted to execute a computing environment (132) on the host computing device.

2. The personal surveillance device according to the preceding claim,
wherein one of the first surveillance sensor element and the second surveillance sensor element is an electromagnetic radiation sensor element, in particular a radar sensor element, and
wherein the other one of the first surveillance sensor element and the second surveillance senor element is an optical sensor element, in particular a camera sensor element.

3. The personal surveillance device according to at least one of the preceding claims,
wherein at least one of the first surveillance sensor element and the second surveillance sensor element is adapted for generating surveillance sensor data of surveying a physical space and/or a person (102) in a physical space; and
wherein the generated surveillance sensor data is securely stored in the personal surveillance device.

4. The personal surveillance device according to at least one of the preceding claims,
wherein the personal surveillance device is adapted to survey a physical space and/or a person (102) in a physical space; and
wherein the personal surveillance device is adapted to generate surveillance status information indicative of a surveillance status of the physical space and/or the person in the physical space.

5. The personal surveillance device according to at least one of the preceding claims,
wherein one of the first and second surveillance sensor elements, during a defined surveillance time span, is surveying a physical space and/or a person (102) in a physical space substantially continuously, and
wherein the other one of the first and second surveillance sensor elements, during the defined surveillance time span, is surveying the physical space and/or the person in the physical space non-continuously, in particular is surveying the physical space and/or the person in the physical space only upon detection of a surveillance event indicative of a non-compliant surveillance status by the one of the first and second surveillance sensor elements.

6. The personal surveillance device according to at least one of the preceding claims,
wherein at least one of the first and second surveillance sensor elements, during a defined surveillance time span, is surveying a physical space and/or a person (102) in a physical space substantially continuously,
wherein surveillance sensor data of the first and/or second surveillance sensor element is stored temporarily in the personal surveillance device, in particular as a loop of a defined length, and
wherein upon detection of a surveillance event indicative of a non-compliant surveillance status, the temporarily stored surveillance sensor data is retained in the personal surveillance device, and wherein otherwise the stored surveillance sensor data is discarded or overwritten after a defined time period.

7. The personal surveillance device according to one of claims 5 or 6,
wherein the computing environment is arranged for interaction with the person to be surveyed; and
wherein the defined surveillance time span is at least a part of the time span the person to be surveyed is interacting with the computing environment,
in particular is the time span a secure interacting mode of the person to be surveyed with the computing environment is active.

8. The personal surveillance device according to at least one of the preceding claims 4 to 7,
wherein the surveillance status information is indicative of a compliant surveillance status and/or a non-compliant surveillance status, in particular
wherein the personal surveillance device enables the interaction of a person to be surveyed with the computing environment in case of a compliant surveillance status, and prohibits and/or terminates the interaction of the person to be surveyed with the computing environment in case of a non-compliant surveillance status.

9. The personal surveillance device according to at least one of the preceding claims 4 to 8,
wherein the computing environment is arranged for interaction with the person to be surveyed;
wherein interacting with the computer environment comprises two different modes of interacting, a regular mode of interacting and a secure mode of interacting, and
wherein the secure mode of interacting is enabled only in case the surveillance status information indicates a compliant surveillance status.

10. A personal surveillance system (100), comprising
a first personal surveillance device (110), which is a personal surveillance device according to at least one of the preceding claims, the first personal surveillance device further comprising at least one communication element (112a,b); and
a second personal surveillance device (120) adapted to be affixable to a person (102) to be surveyed, the second personal surveillance device comprising
at least one communication element (122); and
a fixation element (324) for affixing the second personal surveillance device to a person to be surveyed;
wherein the second personal surveillance device is adapted to detect a fixation status indicating whether the fixation element is affixed to the person to be surveyed;
wherein the first personal surveillance device and the second personal surveillance device are communicatively connected (134);
wherein the first personal surveillance device and/or the second personal surveillance device is/are adapted to detect whether the first personal surveillance device and the second personal surveillance device are within a defined distance from each other, and
wherein the second personal surveillance device is adapted to communicate the fixation status to the first personal surveillance device.

11. The system according to at least one of the preceding claims,
wherein the second personal surveillance device comprises a sensor element (220) for detecting a biological property of the person to which the second personal surveillance device is affixed to, wherein the sensor element in particular is an optical sensor element, an acoustic sensor, an infra-red sensor element, or a laser sensor element, and
wherein the biological property in particular is a heartbeat, an oxygen level, a tissue structure, a blood vessel structure, a skin structure or a fingerprint.

12. The system according to at least one of the preceding claims, the second personal surveillance device further comprising
a display element (326) adapted to display a computer readable symbol, and
wherein at least one of the first surveillance sensor element (116a) and the second surveillance sensor element (116b) is adapted to acquire the displayed computer readable symbol.

13. The system according to the preceding claim,
wherein the secure mode of interacting is enabled only after a valid computer readable symbol displayed on the display element and was acquired by at least one of the first surveillance sensor element and the second surveillance sensor element.

14. The system according to at least one of the preceding claims 12 or 13, at least one of the first personal surveillance device and the second personal surveillance device further comprising an interaction element (228,302) adapted for interaction with the person to be surveyed,
wherein interacting with the interaction element enables the acquisition of image information by at least one the surveillance sensor elements,
wherein the acquired image information comprises at least one of the computer readable symbol, the examinee and the wristband.

15. The device or system according to at least one of the preceding claims,
wherein the computing environment is adapted for displaying at least one of examination data and examination answer data, and
wherein the computing environment is adapted for marking the displayed data.

16. A method of surveillance using a personal surveillance device (110) comprising
a first surveillance sensor element (116a);
a second surveillance sensor element (116b);
at least one communication element (112a,b); and
a processing element (314);
wherein the first surveillance sensor element and the second surveillance sensor element are sensor elements each comprising a different sensor type;
the method comprising
connecting the personal surveillance device to a host computing device; and
executing, by the personal surveillance device, a computing environment on the host computing device.

17. The method of the preceding claim, the method further comprising
generating, by at least one of the first surveillance sensor element and the second surveillance sensor element, surveillance sensor data of surveying a physical space and/or a person in a physical space; and
securely storing the generated surveillance sensor data in the personal surveillance device.

18. The method of at least one of the preceding claims, the method further comprising generating, by the first personal surveillance device, surveillance status information indicative of a surveillance status of a physical space and/or a person in a physical space.

19. The method of at least one of the preceding claims, the method further comprising continuously surveying a physical space and/or a person (102) in a physical space during a defined surveillance timespan with at least one of the first and second surveillance sensor elements;
detecting one of a compliant surveillance status and a non-compliant surveillance status of the physical space and/or the person in the physical space;
upon detecting of a surveillance event indicative of a non-compliant surveillance status, surveying the physical space and/or the person in the physical space with the other one of the first and second surveillance sensor element;
and in particular
switching from a secure mode of interacting with the computing environment to a regular mode of interacting with the computing environment; and
generating non-compliance surveillance status information comprising at least part of the surveillance sensor data of at least one of the first and second surveillance sensor elements obtained while surveying the person while the secure mode of interacting was active.

20. The method of at least one of the preceding claims, the method further comprising continuously surveying the person during a defined surveillance timespan with at least one of the first and second surveillance sensor elements;
storing the surveillance sensor data of the first and/or second surveillance sensor element temporarily, in particular storing a loop of the surveillance sensor data of a defined length,
detecting one of a compliant surveillance status and a non-compliant surveillance status of the person;
upon detection of a surveillance event indicative of a non-compliant surveillance status, retaining the temporarily stored surveillance sensor data in the personal surveillance device, and otherwise discarding or overwriting the stored surveillance sensor data after a defined time period; and in particular
switching from a secure mode of interacting with the computing environment to a regular mode of interacting with the computing environment; and
generating non-compliance surveillance status information comprising at least part of the retained surveillance sensor data of at least one of the first and second surveillance sensor elements obtained while surveying the person while the secure mode of interacting was active.

21. The method of at least one of the preceding claims,
the personal surveillance device being a first personal surveillance device, further comprising at least one communication element (112a,b),
the method further using
a second personal surveillance device (120) adapted to be affixable to the person to be surveyed, the second personal surveillance device comprising
at least one communication element (122); and
a fixation element (324) for affixing the second personal surveillance device to the person to be surveyed,
wherein the second personal surveillance device is adapted to detect a fixation status indicating whether the fixation element is affixed to a person to be surveyed;
wherein the first personal surveillance device and the second personal surveillance device are communicatively connected,
the method further comprising
detecting, by the first personal surveillance device and/or the second personal surveillance device, whether the first personal surveillance device and the second personal surveillance device are within a defined distance from each other; and
communicating a fixation status from the second personal surveillance device to the first personal surveillance device.

22. The method of at least one of the preceding claims, the method further comprising affixing the second personal surveillance device to a person to be surveyed,
determining a surveillance status of the person to be surveyed, and
switching from a regular mode of interacting with the computing environment to a secure mode of interacting with the computing environment when the surveillance status information indicates a compliant surveillance status,
in particular switching after at least one of the first surveillance sensor element and the second surveillance sensor element has acquired a computer readable symbol displayed on the second personal surveillance device.

23. A computer-readable storage medium comprising instructions which, when executed by a computer, cause the computer to carry out the steps of the method of one of claims 21 to 28.
